# EUROPÄISCHE PATENTSCHRIFT

(11) **EP 1 980 094 B1**
(45) Veröffentlichungstag und Bekanntmachung des Hinweises auf die Patenterteilung: **07.10.2009**
(21) Anmeldenummer: 06830659.6
(22) Anmeldetag: 15.12.2006
(51) Int. Cl.: H04N 1/60, G06F 3/12

(54) **VERFAHREN, COMPUTERPROGRAMMPRODUKT UND VORRICHTUNG ZUR ERZEUGUNG UND VERARBEITUNG VON DOKUMENTENDATEN MIT INDIZIERTEN FARBMANAGEMENTRESSOURCEN**
METHOD, COMPUTER PROGRAM PRODUCT, AND DEVICE FOR THE CREATION AND PROCESSING OF DOCUMENT DATA COMPRISING INDEXED COLOR MANAGEMENT RESOURCES
PROCÉDÉ, PRODUIT PROGRAMME D'ORDINATEUR ET DISPOSITIF DE PRODUCTION ET DE TRAITEMENT DONNÉES DOCUMENTS LIÉES AUX RESSOURCES DE GESTION DE COULEUR INDEXÉES

(30) Priorität: 20.01.2006 DE 102006002886
(43) Veröffentlichungstag der Anmeldung: 15.10.2008
(73) Patentinhaber: Océ Printing Systems GmbH, 85586 Poing (DE)
(72) Erfinder: BÄUMLER, Ulrich, 85586 Poing (DE); EILER, Göran, 85586 Poing (DE); JÖRGENS, Dieter, 85598 Baldham (DE); LA ROSA DUCATO, José, 85435 Erding (DE); PETSCHIK, Benno, 85570 Markt Schwaben (DE); SIEMENS, Rüdiger, 81825 München (DE)
(74) Vertreter: Schaumburg, Thoenes, Thurn, Landskron, Eckert
(86) Internationale Anmeldenummer: PCT/EP2006/069768
(87) Internationale Veröffentlichungsnummer: WO 2007/087935

(56) Entgegenhaltungen:
- GB-A- 2 368 436
- US-A1- 2005 248 787
- US-A1- 2006 050 288
- US-B1- 6 430 311
- AFP COLOR CONSORTIUM: "Color Management Object Content Architecture (CMOCA) Reference" WWW.AFPCOLOR.ORG, [Online] Mai 2006 (2006-05), Seite I-XIV, 1-140, XP002426160 Gefunden im Internet: URL:http://www.outputlinks.com/SpecialInte rest/AFPColorConsortium/cmrarchv32ExtAFPCC .pdf> [gefunden am 2007-03-22]

## Beschreibung

Die Erfindung betrifft ein Verfahren, ein Gerätesystem und ein Computerprogramm zum Verarbeiten eines ressourcenbasierten Dokumentendatenstroms. Ein typisches Dokumentendatenformat dieser Art ist das Format AFP^{™} (Advanced Function Presentation). Es wird insbesondere in digitalen Produktionsdruck-Umgebungen verwendet, das heisst in Datenverarbeitungs- und Drucksystemen, die Dokumentendaten mit hoher Geschwindigkeit von bis zu einigen tausend Seiten pro Minute verarbeiten, wobei die Dokumente insbesondere jeweils dokumentenindividuelle Daten umfassen.

Die Erfindung betrifft insbesondere die Erzeugung und Verarbeitung ressourcenbasierter Dokumentendatenströme, die farbbezogene Daten für die Dokumente enthalten.

Details des Dokumentendatenstroms AFP^{™} sind in der Publikation Nr. S-544-3884-02, herausgegeben von der Firma International Business Machines Corp. (IBM) mit dem Titel "AFP Programming Guide and Line Data Reference" beschrieben. Eine Übersicht zeigen Seiten v bis viii. Eine Einleitung ist auf den Seiten und 1 bis 3. Auf den Seiten 65 bis 70 sind Details und Beispiele von strukturierten Feldern beschrieben. Der Dokumentendatenstrom AFP wurde weiterentwickelt zu dem Dokumentendatenstrom MO:DCA^{™}, welcher zum Beispiel in der IBM-Publikation SC31-6802-06 (Januar 2004) mit dem Titel "Mixed Object Document Content Architecture Reference" beschrieben ist, siehe dort insbesondere die Übersicht auf den Seiten 248 bis 254 und 260 bis 262 sowie die Seiten 543 bis 549. Details dieses Datenstroms sind auch in der US-A-5,768,488 beschrieben. Dort werden auch bestimmte Felddefinitionen des Datenstroms, die Steuerungsdaten enthalten, sogenannte "structured fields" erläutert.

AFP/MO:DCA-Datenströme werden im Zuge von Druckproduktionsaufträgen häufig in Datenströme des Intelligent Printer Data Stream™ (IPDS™) umgewandelt. In der US-A-5,982,997 ist ein solcher Prozeß gezeigt. Details zu IPDS Datenströmen sind zum Beispiel im IBM-Dokument Nr. S544-3417-06, "Intelligent Printer Data Stream Reference", 7. Ausgabe (Nov. 2002) beschrieben, siehe dort insbesondere die Übersicht von Seite i bis xxii, die Einleitung auf Seiten 56 bis 88 und sowie die Erläuterungen zum Load Copy Control auf den Seiten 140 bis 150.

In Datenströmen der AFP/IPDS Architekur sind auch sogenannte Map Media Type (MMT) strukturierte Felder vorgesehen, siehe die o.g. Publikation Nr. SC31-6802-06 auf Seiten 260-262. Mit ihnen ist es möglich, in Druckanwendungen die zu benutzenden Bedruckmedien anzugeben, jeweils durch Name oder Typbezeichnung gekennzeichnet. Eine Steuerungssoftware zur Ansteuerung eines Druckgeräts überprüft dann, welches Einzugsfach in einem Druckgerät den gewünschten Aufzeichnungsträger enthält und wählt das erste übereinstimmende Fach zum Drucken aus. Mit dieser Methode wird von einer Druckanwendung ein physikalisches Einzugsfach eines Druckgerätes ausgewählt, aber nicht die Art des zu bedruckenden Mediums angegeben, wie beispielsweise bestimmte vorbedruckte Formulare, transparente Folien, farbiges Papier usw., die für die Anwendung benutzt werden sollen. Derart festgelegte Anwendungen können nur für ein spezifisches, angegebenes Drucksystem verwendet werden und sind abhängig von Setup-Einstellungen des Druckgerätes.

Ferner besteht dabei das Problem, daß derart festgelegte Anwendungen nicht die erwarteten Ergebnisse produzieren, wenn sie an ein unterschiedliches Drucksystem geschickt werden.

Verschiedene weitere Druckdatenströme und Drucksysteme, die zur Verarbeitung verschiedenster Druckdatenströme einschließlich AFP und IPDS geeignet sind, sind in der Veröffentlichung "Das Druckerbuch", Dr. Gerd Goldmann (Herausgeber), Ocè Printing Systems GmbH, 6. Ausgabe (Mai 2004), ISBN 3-00-001019-x beschrieben. In Kapitel 14 ist das Serversystem Ocè PRISMAproduction beschrieben. Dieses flexible Druckdaten-Serversystem ist beispielsweise dazu geeignet, Druckdaten von Datenquellen wie einem Quell-Computer, der Druckdaten in einer bestimmten Druckdatensprache wie AFP (Advanced Function Presentation), MO:DCA, PCL (Printer Command Language), PostScript, SPDS (Siemens Print Data Stream), in der von der Firma Adobe Systems Inc. entwickelten Portable Document Format (PDF) oder in der von der Firma Xerox Corporation entwickelten Sprache Line Coded Document Data Stream (LCDS) zu empfangen, in ein bestimmtes Ausgabeformat umzuwandeln, zum Beispiel in das Intelligent Printer Data Format (IPDS) und die Daten in diesem einheitlichen Ausgabeformat an ein Druckproduktionssystem zu übertragen. In Kapitel 10 sind verschiedene Technologien zum Farbdruck beschrieben, in Kapitel 11 insbesondere die Technologie Océ Direct Imaging, welche einen Farbdruck auf Basis von 7 Grundfarben ermöglicht.

Bei der Spezifikation und Weiterentwicklung von Druckdatenströmen besteht mitunter das Problem, daß im Datenstrom neue Kommandos eingefügt werden müssen, um den technischen Weiterentwicklungen von Computern, Druckgeräten und/oder Nachverarbeitungsgeräten Rechnung zu tragen. Das Festlegen derartiger Erweiterungen ist meist ein relativ aufwendiges Verfahren, bei dem verschiedene Industriepartner zusammenarbeiten müssen, um die Änderungen bzw. Neuerungen untereinander abzustimmen.

In der US-A-6,097,498 ist beschrieben wie drei neue Datenstrom-Kommandos, nämlich WOCC, WOC sowie END dem Intelligent Printer Datastream™ (IPDS™) hinzugefügt werden.

Eine weitere Möglichkeit, zusätzliche Steuerungsdaten in einem AFP-Datenstrom zu hinterlegen, besteht darin, Daten in sogenannten object containers abzulegen, siehe zum Beispiel in der Publikation Nr. SC31-6802-05 die Seiten 93-95.

In der von der Anmelderin stammenden WO 03/069548 sind weitere Maßnahmen zum Einfügen neuer Steuerungsinformationen in AFP bzw. IPDS Datenströmen beschrieben.

Aus der US 6,327,624 B1 ist ein Verfahren zum Erzeugen eines Dokumentendatenstroms, der strukturierte Felder enthält, bekannt.

In der IBM-Publikation SC31-6805-05 mit dem Titel "Image Object Architecture Reference", 6. Ausgabe (August 2002) wird beschrieben wie in den Datenströmen AFP und IPDS Dokumentenobjekte wie Text, Bilder, Grafiken, Barcodes und Fonts behandelt werden, siehe dort insbesondere die Übersicht Seite vi bis xvi, sowie die Einleitung auf den Seiten 1 bis 21. Dafür wird eine sogenannte Object Content Architecture (OCA) definiert, in der für die jeweiligen Objekte bestimmte Datenstrukturen und Steuerungsparameter bzw. die Objekte kennzeichnende Parameter festgelegt werden, für Bilder beispielsweise die sogenannte Image Object Content Architecture (IOCA), für Grafiken eine entsprechende GOCA, für Präsentationstexte eine PTOCA usw. Die IOCA wird in dem oben genannten Dokument ausführlich beschrieben. Auf den Seiten v bis vii des Dokuments sind weitere für das Verständnis der Datenströme hilfreiche IBM-Dokumente genannt.

IPDS und AFP Datenströme enthalten und/oder referenzieren in der Regel sogenannte Ressourcen, die Daten enthalten, die zur Ausgabe der Dokumente benötigt werden. Die Daten einer Ressource können dabei für einen oder mehrere Druckaufträge, die wiederum mehrere Dokumente bzw.-Dokumententeile enthalten, durch einfache Referenzierung mehrfach verwendet werden, ohne mehrfach übertragen werden zu müssen. Dadurch wird die Menge der von einer Verarbeitungseinheit (zum Beispiel einem die Dokumente erzeugenden Host-Computer) an eine nachfolgende Verarbeitungseinheit (zum Beispiel einen Druckserver oder ein Druckgerät) zu übertragenden Daten verkleinert, insbesondere, wenn Daten von einer Vielzahl von Dokumenten zu übertragen sind, die teilweise gleiche Daten aufweisen bzw. benötigen. Beispiele solcher Ressourcen sind Zeichensätze (Fonts) oder Dokumenten zu überlagernde Formulare (Overlays). Die Ressourcen können dabei im Druckdatenstrom selbst enthalten sein oder getrennt von diesem zwischen den beteiligten Systemen übertragen werden und innerhalb verschiedener Dokumente jeweils nur referenziert sein. Dabei kann insbesondere vorgesehen sein, dass die Ressourcen im weiterverarbeitenden Gerät (zum Beispiel Druckserver oder Druckgerät) bereits gespeichert sind, so dass sie nicht erneut mit jedem Druckauftrag übertragen werden müssen, sondern lediglich referenziert werden müssen.

Bei der Darstellung von AFP-Dokumentendaten werden Ressourcen, die im AFP-Dokumentendatenstrom an verschiedenen Stellen stehen bzw. aus verschiedenen. Quellen stammen, mit den entsprechenden variablen Daten zusammengeführt. Die Ressourcendaten können dabei als interne Ressourcen im Dokumentendatenstrom eingebunden sein oder als externe Ressourcen über einen Ressourcennamen aus Bibliotheken aufgerufen werden. In einem Parsing-Vorgang werden weiterhin die Daten auf Konsistenz hin geprüft.

Im Dokument "Print Services Facility for OS/390 & z/OS, Introduction", Vers. 3, Release 3.0 Nr. G544-5625-03 der Firma IBM vom März 2002 sind Details beschrieben, wie ein sog. Line Data- bzw. MO:DCA-Dokumentendatenstrom in einen IPDS-Datenstrom umgewandelt wird, siehe dort insbesondere die Übersicht auf den Seiten i bis vii, die Einleitung auf den Seiten 1 bis 10. Das Softwareprogramm Print Service Facility (PSF) kombiniert dabei variable Dokumentendaten mit Ressourcendaten um Ausgabedaten, die an einen Drucker als Ausgabegerät gesandt werden, zu verwalten und zu steuern. Von der Anmelderin werden Softwareprodukte unter den Handelsnamen Océ SPS und Océ CIS entwickelt und vertrieben, die entsprechende Funktionen aufweisen.

Aus der US 2005/0024668 A1 ist ein Verfahren zum sicheren Verwalten und Zuordnen von Ressourcen bei der Bearbeitung von Ressourcenbasierten Druckaufträgen bekannt. Aus der WO-A1-2004/0008379 ist ein Verfahren zur Verarbeitung von Ressourcendaten in einem Dokumentendatenstrom bekannt.

Bei der Verarbeitung von farbbezogenen Objektdaten wie zum Beispiel Bildern Grafiken und Texten tritt grundsätzlich die Problematik auf, dass die in einem Ausgabegerät wiedergegebenen Farben nicht ohne weiteres mit den Originalfarben übereinstimmen. Deshalb wurde zur Verarbeitung von Farbdaten die sogenannte Color Management Technologie entwickelt, die sich zum Ziel setzt, eine möglichst-originalgetreue Wiedergabe von Farben zu ermöglichen. Dazu werden zum Beispiel Farbprofile von Eingabe- und Ausgabegeräten.definiert, die deren Eigenschaften bei der Verarbeitung von Farbdaten angeben. Durch Berücksichtigen der Farbprofile können Farbdaten in einer Verarbeitungskette dann so umgerechnet werden, dass das am Ende der Kette wiedergegebene Farbobjekt relativ genau mit dem Originalobjekt übereinstimmt. Farbdatenverarbeitung auf Basis von Farbprofilen ist jedoch in vielen Fällen relativ aufwendig.

Für Farbinformationen sind insbesondere im Bereich der Dokumentendatenverarbeitung auch sogenannte Highlight Color (HLC) -Farben, -Verfahren und -Einrichtungen entwickelt worden. Derartige Farben umfassen zumindest einen Farbton, der in der Regel abseits vom Farbraum üblicher Farbstoffe liegt. Dieser Farbton kann zum Beispiel ein anwendungsspezifischer Farbton sein (zum Beispiel für ein farbiges Firmenlogo, eine Schmuckfarbe oder eine sog. "spot color") und/oder derart angepasst sein, dass er Zugang zu Farbtönen erlaubt, die mit Standard-Druckfarben wie zum Beispiel gelb (Y), magenta (M), cyan (C) und schwarz (K) nicht erreichbar sind. Die Anmelderin vertreibt zum Beispiel derartige Highlight Color Toner für elektrografische Drucker unter dem Handelsnamen Océ Custom Tone®. Dabei ist es insbesondere möglich, Druckstoffe (Toner) kundenspezifisch in Sonder-Farben bereitzustellen, die in dieser Ausprägung einzigartig sind und nur von diesem Kunden verwendet werden, weil sie beispielsweise eine von dem Kunden individuell festgelegte, ihn kennzeichnende Farbe aufweisen. Derartige Farb-Druckstoffe werden zum Beispiel zum Drucken von Firmenlogos in einer spezifischen Firmenfarbe ("company color") verwendet.

Beim Highlight Color-Druck kann auch eine Standardfarbe und eine HLC-Farbe in unterschiedlichen Helligkeitsstufen bzw. Farbsättigungswerten gedruckt werden. In der Regel ist die Standardfarbe schwarz und wird in unterschiedlichen Graustufen gedruckt.

Der Highlight-Color-Druck ist kostengünstiger als ein Vollfarbdruck mit vier Grundfarben (sog. Vier-Farbdruck), bei dem durch den Übereinanderdruck von den Grundfarben cyan, magenta, gelb und schwarz verschiedenste Farben erreicht werden können. Bei dem Vier-Farbdruck ist nachteilig, dass die Leuchtkraft der Farben, die gedruckt werden können, trotz der Farbenvielfalt beschränkt ist. Vor allem in den Bereichen rot, grün und blau kann im Vierfarbdruck-Verfahren oftmals eine von einem Kunden geforderte Leuchtkraft und damit eine kundenspezifische Spezialfarbe häufig nicht erreicht werden

Da oftmals lediglich eine spezielle Farbe gewünscht wird, ist es für derartige Anwendungen wesentlich sinnvoller spezielle Druckfarben zu verwenden, die die gewünschte Farbe aufweisen, wenn sie vollflächig auf das Papier gedruckt werden.

Aus der US 2005/0248787 A1 ist ein Verfahren bekannt, mit dem zur Beschreibung von Farbeigenschaften von Objekten eines Dokuments sogenannte Farbmanagement Ressourcen (Color Management Resources, CMR) eingesetzt werden, die beim Verarbeiten der Dokumentendaten verwendet werden, um farbbezogene Festlegungen bei der Ausgabe zu treffen.

In der von der Anmelderin am gleichen Prioritätstag hinterlegten Patentanmeldung mit dem Titel "Verfahren, Computerprogrammprodukt und Vorrichtung zur Erzeugung und Verarbeitung von Dokumentendaten mit medienbezogenen Farbmanagementressourcen" (DE 102006002878.3, WO 2007/085524 A2) sind weitere Konzepte zur Verarbeitung ressourcenbasierter Druckdatenströme enthalten.

Druckprozesse werden zunehmend umfangreicher, da immer mehr Geräte in einen Druckprozess integriert werden, wodurch die Funktionsvielfalt zunimmt. Zudem werden durch das Internet und Intranet Druckprozesse zunehmend regional verteilt ausgeführt oder einem Pool von Druckern zugeordnet, die regional verteilt sein können. Außerdem müssen zunehmend Geräte unterschiedlicher Hersteller in einem Prozess zusammen arbeiten. Um diesen gestiegenen Anforderungen gewachsen zu sein, wurden sogenannte Job Ticket Daten vorgesehen, die als Auftragsbegleitdaten zu einem Dokumentendatenstrom zwischen zwei oder mehreren Software- und/oder Hardwaresystemen ausgetauscht werden, insbesondere in einer vom übrigen Dokumentendatenstrom separierten Datei. In einem Industriekonsortium wurde dazu eine einheitliche Spezifikation zum Austausch von Datenformaten im Druckprozess vereinbart, die als Jobdefinitionsformat (JDF) bezeichnet wird. Hierzu gibt es ein korrespondierendes Jobnachrichtenformat (Job Messaging Format bzw. JMF), das entsprechend spezifiziert ist. Die Spezifikation von JDF kann von der Internetseite www.cip4.org heruntergeladen werden. Die zum Zeitpunkt der vorliegenden Patentanmeldung aktuelle Spezifikation ist JDF Specification Release 1.3, siehe dort insbesondere die Übersicht auf den Seiten i bis xx sowie die Einleitung auf den Seiten 1 bis 34.

Die oben genannten Publikationen bzw. Dokumente bzw. die dort beschriebenen Verfahren, Systeme und Maßnahmen können in Verbindung mit der vorliegenden Erfindung Anwendung finden.

Aus der EP1155819 ist weiterhin ein Drucksystem und -verfahren bekannt, das eine Farbinformationsdatenbank verwendet, in der Farbinformationen registriert sind. Während des Druckvorgangs wird für eine über einen Farbnamen spezifizierten Farbe die entsprechende Farbinformation in dieser Datenbank nachgeschlagen und verwendet.

Es ist Aufgabe der Erfindung, die Verarbeitung von Farbinformationen in einem ressourcenbasierten Dokumentendatenstrom zu verbessern.

Diese Aufgabe wird durch die in den unabhängigen Ansprüchen angegebene Erfindung gelöst. Vorteilhafte Ausführungsformen der Erfindung sind Gegenstand der Unteransprüche.

Gemäß einem ersten Aspekt der Erfindung wird zum Erzeugen und/oder Verarbeiten eines Dokumentendatenstroms, der auf Farbmanagementressourcen bezogene Daten umfaßt, mit denen die Verarbeitung farbbezogener Daten des Dokumentendatenstroms steuerbar ist, dem Dokumentendatenstrom mindestens eine indizierte Farbmanagementressource zugeordnet ist, mit der farbbezogene Daten des Dokumentendatenstroms mindestens einer vorgegebenen Farbpalette zuordenbar sind.

Die Erfindung beruht auf der Erkenntnis, dass die Handhabung von farbbezogenen Daten wesentlich vereinfacht werden kann, wenn die Basis auf die Farbdaten bezogen wird bzw. der damit verbundene verfügbare Farbraum eingeschränkt ist.

Die Erfindung beruht weiterhin auf der Erkenntnis, dass beim Erzeugen und/oder Verarbeiten von Dokumentendaten die grafischen Wiedergaben der in den Dokumenten enthaltenen farbigen Objekte bereits durch die dabei verwendeten Ausgabegeräte aufgrund der gerätespezifischen Farbcharakteristiken, wie zum Beispiel der in einem Druckgerät verfügbaren Druckfarbstoffe, eingeschränkt ist.

Weiterhin wurde erkannt, dass die genannten Einschränkungen für die Übertragung von Dokumentendaten, die Farbinformationen auf Basis von Farbmanagementressourcen definieren, durch Bezug auf vorgegebene Farbpaletten sowohl eine sehr genaue, geräteübergreifende Farbzuordnung möglich ist als auch eine performante Verarbeitung der Farbdaten, weil sowohl die Farbcodierung mit nur wenigen Datenmengen als auch die Farbdatenverarbeitung mit geringem Aufwand zu bewerkstelligen ist. Mit der Erfindung kann insbesondere der Vorteil erreicht werden, dass aufwendige Farbdatentransformationen nicht benötigt werden, weil die vorgegebenen Farbpaletten systemübergreifend vom System, das die Dokumentendaten erzeugt, bis hin zum Ausgabesystem, das die Dokumentendaten ausgibt (zum Beispiel in einem Druckgerät), bekannt ist und insbesondere bereits vorab abgeglichen ist.

Durch den Bezug der Dokumentendaten auf eine indizierte Farbmanagementressource ist es dabei möglich, Farbinformationen durch einen kurzen, zum Beispiel nur wenigen Byte umfassenden Indexcode zu adressieren. Auf Basis der indizierten Farbmanagementressource, die genauere Angaben über die diesem Code zugehörigen Farbdaten enthält, ist insbesondere bei der Übertragung des Dokumentendatenstroms eine Reduzierung des Datenstromvolumens möglich, weil Spezialfarbtöne wie zum Beispiel Highlight Colors direkt mit einem Indexwert adressierbar sind. Die indizierte Farbmanagementressource kann insbesondere Daten enthalten, die Aufschluß über einen dem Indexcode zugeordneten Farbraum, wie zum Beispiel Rot-Grün-Blau (RGB), gelb-magenta-cyan-schwarz (YMCK), Grautöne oder Mischung individueller Farbtöne (sogenannter Colorants) enthält. Die indizierte Farbmanagementressource kann die individuellen Farbtöne bzw. -stoffe insbesondere durch einen Klartext-Namen identifizieren.

Die mit den Indexcodes definierten bzw. direkt adressierbaren Farben können einer oder mehreren Farbtönen und/oder Farbstoffen entsprechen oder auch einer Kombination von einer oder mehreren dieser Farbtöne. Zur Verarbeitung von Dokumentendaten hat es sich insbesondere als ausreichend erwiesen, eine beschränkte Anzahl von Farben, zum Beispiel 64.000 Farben, als Farbpalette zu definieren. Die Festlegung der Farben im Einzelnen kann dabei insbesondere individuell nach Anwendung erfolgen. Sie gilt aber insbesondere prozessübergreifend von der Erzeugung eines Dokuments bis zu dessen Ausgabe auf einem Ausgabegerät. Die Festlegung für eine Farbpalette kann aber auch anwendungsübergreifend gelten, wobei sogar denkbar ist, dass bestimmte Farbpaletten mit ihren zugehörigen Farbtönen in einem Farbdefinitionssystem standardisiert bzw. festgelegt werden. Im Datenstrom referenzierte, indizierte Farben können dann im Ausgabegerät direkt auf die entsprechenden, im Ausgabegerät verfügbaren Farbtöne bzw. Farbtonkombinationen abgebildet und zur Ansteuerung/Ausgabe der entsprechenden Farbstoffe verwendet werden.

Eine Farbpalette kann insbesondere mit relativ kurzen Codes, für 64.000. Farben zum Beispiel mit zwei-Byte-Codes codiert werden. Dabei ist es möglich, die verfügbaren Farben in verschiedene Paletten zu unterteilen, wobei zum Beispiel 264 Paletten mit einem ersten Byte codiert werden und 264 Farben pro Palette mit einem zweiten Byte.

Gemäß einem zweiten Aspekt der Erfindung, der unabhängig und/oder in Kombination mit dem ersten Aspekt der Erfindung gesehen werden kann, wird zum Übertragen einer Farbinformation eines Objekts in einem ressourcenstrukturierten Dokumentendatenstrom die Farbinformation über einen Indexwert übertragen, der einem Eintrag in einer indizierten Farbmanagementressource entspricht.

Der Indexwert ist dabei ein relativ einfacher, kurzer Zahlencode, der einer beschränkten Anzahl verfügbarer Farben entspricht und nur wenige, zum Beispiel ein bis vier Byte umfasst. Innerhalb der Farbmanagementressource ist der Zahlencode insbesondere einem Farbmodell und/oder einer Farbe zugeordnet. Die Farbmanagementressource kann insbesondere unabhängig vom Dokumentendatenstrom erzeugt und/oder zwischen einem die Dokumentendaten sendenden und die Dokumentendaten empfangenden System ausgetauscht werden. Erzeugung, Austausch und Speicherung der Farbmanagementressource kann dabei insbesondere gemäß den beiden Druckdatenströmen AFP und IPDS für Ressourcen üblichen Methoden erfolgen. Auch die in der US 2005/0248787 A1 in Zusammenhang mit Color-Management-Ressources angegebenen Verfahren, Maßnahmen und Systemstrukturen sind im Zusammenhang mit der vorliegenden Erfindung vorteilhaft nutzbar. Dieses Dokument wird dazu an dieser Stelle der vorliegenden Beschreibung nochmals durch Bezugnahme eingefügt.

Gemäß der Erfindung kann somit prozessübergreifend bereits beim Erzeugen von Dokumenten eine codierte Referenzinformation erzeugt werden, die angibt, welche Grundfarbtöne bzw. Grundfarbtonkomponenten bei der Ausgabe der Daten verwendet werden sollen. Die Grundfarbtöne können bereits im Vorfeld entsprechend den in einem Ausgabegerät verfügbaren Grundfarben ausgewählt bzw. festgelegt werden. Sie und/oder das durch sie gebildete Farbsystem sind im übrigen frei wählbar, das heisst nicht unbedingt gebunden an bestehende Farbsysteme wie zum Beispiel RGB oder YMCK. Innerhalb eines Datenstroms oder auch Dokuments können dabei objektweise Verschiedene Referenzierungen erfolgen, beispielsweise ein erstes Objekt gemäß einem ersten Farbsystem (zum Beispiel RGB) und ein zweites Objekt gemäß einem zweiten Farbsystem, das vom ersten unabhängig ist. Dabei wird insbesondere ermöglicht, ein ausgabegerätespezifisches Farbsystem zu indizieren, das heisst direkt mit nur wenigen Steuerungsdaten im Dokumentendatenstrom zu referenzieren. Das Farbsystem ist dabei insbesondere geräteindividuell definiert durch geräteindividuelle Farbtöne wie zum Beispiel Highlight Farben oder Custom Tone® Farben, die keine Grundfarben eines herkömmlichen Farbsystems sind.

Zum Erzeugen einer indizierten Farbmanagementressource ist es insbesondere vorteilhaft die in einem Ausgabegerät, wie zum Beispiel einem Drucker, verfügbaren Farbtöne und/oder Druckstoffe sowie deren Eigenschaften, wie zum Beispiel kalorimetrische Farbwerte, verfügbar zu haben bzw. in einer Tabelle zu speichern. Diese können dann bei der Erstellung der indizierten Farbmanagementressource berücksichtigt und insbesondere auch in die Farbmanagementressource aufgenommen werden. Für eine weitgehend automatisierte Erstellung von indizierten Farbmanagementressourcen ist es vorteilhaft, wenn die Ausgabegeräte diese Werte automatisch an ein Steuerungssystem, das die Erzeugung der Farbmanagementressource steuert, meldet. Dies kann in einer Druckproduktionsumgebung, beispielsweise über ein Datennetzwerk sowie einen Druckserver, erfolgen.

Gemäß einem vorteilhaften Ausführungsbeispiel der Erfindung enthält die indizierte Farbmanagementressource eine codierte Information, zum Beispiel in einem Kopfbereich (header section), die der Anzahl der in der indizierten Farbmanagementressource verfügbaren Prozessfarbpaletten zugeordnet ist.

In einem weiteren, vorteilhaften Ausführungsbeispiel der Erfindung enthält die indizierte Farbmanagementressource prozessfarbpalettenweise eine codierte Information, die angibt, welche insbesondere im Ausgabesystem verfügbaren und/oder in einem Farbsystem, wie zum Beispiel RGB oder YMCK, definierten Farbtöne zur Wiedergabe der Prozessfarben der jeweiligen Prozessfarbpalette benötigt werden.

Gemäß einem weiteren, bevorzugten Ausführungsbeispiel der Erfindung ist die codierte Information eines Farbtons einem insbesondere frei wählbaren Klartext-Namen und/oder einer Farbtonnummer eines vorgegebenen Farbdefinitionssystems, wie zum Beispiel dem Pantone^{®}-System oder dem RAL^{®}-System, zugeordnet.

Weiterhin vorteilhaft ist es, wenn die indizierte Farbmanagementressource und/oder ihr zugeordnete Daten des Dokumentendatenstrom prozessfarbpalettenweise eine codierte Information über die im Dokumentendatenerzeugungs- und/oder -verarbeitungsprozess und/oder im Ausgabegerät verfügbaren Prozeßfarben enthält.

Weiterhin kann die indizierte Farbmanagementressource insbesondere eine codierte Information enthalten, die angibt, zu welcher zweiten Farbpalette Daten des Dokumentendatenstroms neu zugeordnet werden, wenn sie auf einem Ausgabegerät mit der ursprünglichen Zuordnung zu einer ersten Farbpalette nicht wiedergebbar sind.

Der Dokumentendatenstrom kann insbesondere gemäß der Spezifikation AFP, MO:DCA und/oder IPDS,strukturiert sein und insbesondere weitere der jeweiligen Spezifikation entsprechende Ressourcen umfassen.

Die Erfindung ist insbesondere zur Übertragung von Dokumentendatenströmen zwischen einem dem Dokumentendatenstrom erzeugenden System und einem den Dokumentendatenstrom verarbeitenden System vorgesehen, wobei das erzeugende System insbesondere ein Host-Computer oder ein Druckserver sein kann. Das verarbeitende System kann insbesondere ein Druckserver oder ein Druckgerät sein. Die Verarbeitungsschritte der Farbzuordnung können dabei zumindest teilweise im Host-Computer, im Druckserver und/oder im Druckgerät durchgeführt werden. Bei der Ausgabe der Daten von einem Host-Computer an ein Druckgerät über einen Druckserver kann der Druckserver die Daten insbesondere konvertieren, beispielsweise vom MO:DCA-Format in das IPDS-Format.

Gemäß einem weiteren, vorteilhaften Ausführungsbeispiel der Erfindung wird beim Verarbeiten des Dokumentendatenstroms geprüft, ob eine im Datenstrom mittels eines Indexcodes referenzierte, in der Farbmanagementressource definierte Farbe und/oder Farbpalette im Ausgabegerät verfügbar ist, bevor die Ausgabe erfolgt. Dazu kann auch vorgesehen sein, dass in der Farbmanagementressource eine Angabe für eine Substitutionsfarbe und/oder eine Substitutionsfarbpalette enthalten ist, die statt der referenzierten Farbe und/oder Farbpalette zur Ausgabe des Dokumentendatenstroms verwendet wird, wenn die referenzierte Farbe und/oder Farbpalette im Ausgabegerät verfügbar ist.

Die Erfindung kann insbesondere zur Verarbeitung von Dokumentendatenströmen des Formats AFP, MO:DCA oder IPDS vorgesehen sein. Sie ist jedoch nicht auf derartige Datenströme beschränkt, sondern kann auch im Zusammenhang mit anderen Datenströmen, wie zum Beispiel Postscript, PCL oder PDF verwendet werden, mit welchen Dokumentendaten codierbar sind, wobei für die zuletzt genannten Datenströme insbesondere vorgeschlagen wird, für diese Zwecke ein entsprechendes Ressourcenkonzept zu übernehmen, wobei Farbmanagementressourcen vorgesehen werden.

Gemäß einem weiteren vorteilhaften Ausführungsbeispiel der Erfindung enthält die Farbmanagementressource eine Kennung, die einer Farbpalette zugeordnet ist, wobei die Farbpalette insbesondere einem Farbraum, wie zum Beispiel CMYK, CIELAB, RGB, Grautöne oder einem Individualfarbtonraum, einem sogenannten Colorants-Farbtonraum zugeordnet ist. Im Individualfarbtonraüm können Farben auf Basis beliebiger Grundfarbtöne definiert werden, die in der Farbmanagementressource definierbar und zum Beispiel entsprechend verfügbaren Farben in Ausgabegeräten anpassbar sind. Damit ist eine farbkonsistente Verarbeitung von Objekten, insbesondere in Dokumentendatenströmen und insbesondere mit Ausgabegeräten, die mit den oben genannten Highlight-Color-Farben drucken. Die Anzahl der verfügbaren Individualfarben kann dabei prinzipiell beliebig sein, beispielsweise zwei entsprechend einem Druck mit schwarz und einer Highlight-Color-Farbe oder zum Beispiel auch sieben Farben, wie sie in dem vorgenannten Océ "Druckerbuch" in Kapitel 11 unter Océ Direct Imaging beschriebenen Geräten Océ CPS 700" enthalten sind.

Die Color Management Ressourcen enthalten insbesondere Kennungen in Tabellenform, mit denen im Dokumentendatenstrom enthaltene Indexkennungen zuordenbar sind zu jeweils einem Farbraum bzw. einer Farbpalette. In der Farbmanagementressource werden zum Farbraum "Individualfarbtöne" insbesondere codierte Informationen als Farbtonliste gespeichert, die die in diesem Farbraum definierten Farbtöne repräsentieren. Die Farbtöne entsprechen insbesondere den in einem Ausgabegerät verfügbaren Grundfarbtöne, zum Beispiel den in einem elektrografischen Druckgerät verfügbaren Farben der Toner.

Die codierten Farbtoninformationen können dabei insbesondere Textangaben enthalten, mit denen jeweils ein Name für die Farbtöne als Textcode speicherbar ist.

Zur Erstellung einer Farbmanagementressource können die in einem Ausgabegerät verfügbaren Grundfarbtöne insbesondere automatisch vom Ausgabegerät und insbesondere über einen Druckserver an ein zur Erstellung der Farbmanagementressource vorgesehenes System übertragen werden.

In AFP/MO:DCA Dokumentendatenströme kann eine Farbmanagementressource gemäß den üblichen Methoden zu einem Dokumentenobjekt zugeordnet werden über strukturierte Felder bzw. Triplets, zum Beispiel einem Medium Modification Control (MMC) Feld, einer Objektidentifikation (OID), dem Triplet X '92', einer Ressourcenzugangstabelle (Recource Access Table, RAT) usw. Die dabei üblichen hierarchischen Strukturen können übernommen werden. Zur Unterstützung der indizierten Colormanagementressourcen kann das Triplet X '4E' entsprechend ergänzt werden.

Die Ressourcen-Zuordnung über die genannten Methoden sind insbesondere in der US 2005/0248787 A1 im Zusammenhang mit den dortigen Figuren 1 bis 6 ausführlich beschrieben.

Die Einführung von Farbmanagementressourcen, bei denen Individualfarbtöne, insbesondere in Form frei wählbarer Texte vorgesehen sind, erlauben eine vereinfachte Kommunikation zwischen verschiedenen Systemen, die an der Erstellung bzw. Verarbeitung der entsprechenden Dokumentendatenströme beteiligt sind, beispielsweise zwischen AFP-Anwendungen und IPDS-Druckgeräten. Die Farbtreue bei der Ausgabe von Dokumenten kann dadurch mit relativ geringem Aufwand sichergestellt werden, insbesondere wenn individuelle Farbtöne bzw. die ihnen zugeordnete Farbstoffe, die in den Ausgabegeräten speziell verfügbar sind, durch einen einfachen Indexwert direkt ansteuerbar sind. Bei der Verarbeitung der entsprechenden Dokumentendaten kann daher geprüft werden, zum Beispiel bereits in einem Druckserver oder in einem Druckgerät, ob in dem jeweiligen Druckgerät der angeforderte Farbton bzw. der entsprechende Farbstoff verfügbar ist. Innerhalb eines Druckzentrums kann dann ein Druckauftrag gezielt an einen angeschlossenen Drucker weitergeleitet werden, der diesen Druckfarbstoff enthält.

Weiterhin wird dadurch ermöglicht, dass bei der Erzeugung von Dokumenten Farbtöne in außergewöhnlichen Farbtonbereichen erzeugt werden, indem zum Beispiel mehrere Individualfarbtöne bzw. die ihnen zugeordneten Farbstoffe zu neuen Farbtönen kombiniert werden. Wenn die Individualfarbtöne bzw. die damit verbundenen Farbpaletten individuell und frei konfigurierbar sind und die jeweiligen Farben bei der Verarbeitung der Dokumentendaten mit Indexwerten geringen Datenvolumens direkt ansteuerbar sind, wird der Verarbeitungsprozeß, insbesondere die Datenübertragung und die Verarbeitung von Farbdaten bei der Ausgabe, vereinfacht. Falls die Farbtöne in einem Ausgabegerät nicht verfügbar sind, kann bereits vorab festgelegt werden, welche Substitutionsfarben verwendet werden, wodurch unkalkulierbare Farbzuordnungen in Farbtransformationssystemen, die bei der Erstellung der Dokumente noch nicht bekannt sind, vermieden werden können.

Das beschriebene Konzept für Farbmanagementressourcen schafft für Ersteller von Dokumenten ein flexibles, geräteunabhängiges System, weil es von dem Drucken in Grauskalen bis hin zu Vollfarbanwendungen mit einer Vielzahl verschiedener Grundfarben Möglichkeiten der Dokumentengestaltung eröffnet. Auch weitere Funktionalitäten von Hightlight-Color bzw. "spot color" in Postscript/PDF-object containern können in die vorgeschlagene Umgebung integriert werden.

Gemäß einem dritten Aspekt der Erfindung, der zusammen mit den beiden oben genannten Aspekten der Erfindung ausgeführt werden kann, werden beim Erzeugen eines ressourcenbasierten Dokumentendatenstroms, mit dem die Ausgabe mindestens eines Dokuments auf einem Ausgabemedium, insbesondere auf einem Aufzeichnungsträger steuerbar ist, wobei der Dokumentendatenstrom auf mindestens eine Farbmanagementressource bezogene Ressourcenbezugsdaten und auf das Ausgabemedium bezogene Mediumbezugsdaten enthält, die Ressourcenbezugsdaten und die Mediumbezugsdaten logisch miteinander verbunden. Durch diese Verbindung bzw. Zuordnung kann bei einem Wechsel einer Bezugnahme auf ein Ausgabemedium innerhalb des Dokumentendatenstroms, insbesondere bei einem späteren automatisierten Verarbeiten des Dokumentendatenstroms, automatisch ein Wechsel der Bezugnahme auf eine Farbmanagementressource erfolgen.

Dieser dritte Aspekt der Erfindung beruht auf der Erkenntnis, dass bei der Wiedergabe eines Dokuments auf verschiedenen Aufzeichnungsträgern der Farbeindruck farbiger Komponenten je nach Aufzeichnungsträger unterschiedlich ist. Er beruht weiterhin auf der Erkenntnis, dass bei der Wiedergabe der farbigen Komponenten auf einem Ausgabemedium, das ein Aufzeichnungsträger ist, dessen Eigenschaften hinsichtlich Farbe, Helligkeit, Gewicht und/oder Oberfläche den Eindruck bzw. die Werte der letztlich wiedergegebenen Farben beeinflussen. Dementsprechend wird in einem bevorzugten Ausführungsbeispiel der Erfindung zur Verarbeitung farbbezogener Daten von Dokumentendatenströmen, die auf einem bestimmten Ausgabemedium vorgesehen sind, eine dem Ausgabemedium insbesondere individuell zugeordnete Farbmanagementressource vorgesehen, die an die entsprechenden Eigenschaften des Ausgabemediums angepaßte Daten enthält. Bei der Verarbeitung und insbesondere der Ausgabe des Dokumentendatenstroms in einem Ausgabegerät kann eine im Datenstrom bereits bestehende, logische Verbindung bzw. Referenzierung dementsprechend zur Ansteuerung von Farbausgabeelementen verwendet werden.

Weiterhin wurde erkannt, dass auf Basis des Ressourcenmodells für Dokumentendatenströme die Zuordnung eines Ausgabemediums zu Dokumentenbereichen, insbesondere einer oder mehrere Dokumentenseiten, die auf dem selben Ausgabemedium ausgegeben werden sollen, der Umfang des Dokumentendatenstroms dadurch minimiert werden kann, dass innerhalb des Dokumentendatenstroms an entsprechenden, dokumentenbezogenen Stellen nur mit Bezugsdaten das entsprechende Medium ausgewählt wird und die entsprechenden ausführlichen Steuerdaten bezüglich des Mediums, hier insbesondere Farbmanagementressourcen, durch indexartige Ressourcenbezugsdaten mit dem Medium in Verbindung gebracht bzw. bei der späteren Verarbeitung bzw. Wiedergabe der Daten zur Steuerung der Ausgabe verwendet werden können. Dies wird insbesondere dadurch erreicht, dass die auf eine Farbmanagementressource bezogenen Ressourcenbezugsdaten und die Mediumbezugsdaten innerhalb des Dokumentendatenstroms logisch miteinander verbunden werden.

Innerhalb des Dokumentendatenstroms, der Daten zu mehreren Dokumenten umfaßt, innerhalb von Dokumentenseiten und/oder innerhalb von Dokumentenseitenbereichen, die aufeinanderfolgende Seiten umfassen können, kann die Zuordnung von Ressourcenbezugsdaten und Aufzeichnungsträgerbezugsdaten beibehalten werden oder auch verändert werden.

Die Zuordnung einer Farbmanagementressource zu einem Aufzeichnungsträger kann insbesondere durch Referenzierung der Farbmanagementressource innerhalb eines dem Aufzeichnungsträger zugeordneten Datenelements erfolgen.

Die Zuordnung von auf Farbmanagementressourcen bezogenen, seitenbezogenen und/oder medienbezogenen Attributen innerhalb des Dokumentendatenstroms kann insbesondere hierarchisch nach Dokumentenbereichen erfolgen. Eine auf eine Farbmanagementressource bezogene Einstellung kann dabei insbesondere auf den Wert einer übergeordneten Hierarchiestufe erfolgen, wenn eine Hierarchiestufe beendet wird.

Weitere Details des dritten Erfindungsaspekts sind in der eingangs genannten, von der Anmelderin am gleichen Tag hinterlegten Patentanmeldung mit dem Titel "Verfahren, Computerprogrammprodukt und Vorrichtung zur Erzeugung und Verarbeitung von Dokumentendaten mit medienbezogenen Farbmanagementressourcen" enthalten.

Gemäß einem weiteren, vorteilhaften Ausführungsbeispiel der Erfindung werden in einer Druckauftrags-Begleitdatei, die insbesondere gemäß dem JDF-Standard ausgebildet ist, Daten über die Farbmanagementressourcen integriert und die Druckauftrags-Begleitdatei zwischen zwei an der Verarbeitung der Druckdaten beteiligten Datenverarbeitungssystemen ausgetauscht. Die Daten über die Farbmanagementressourcen können dabei hinsichtlich ihres Umfangs je nach den Anforderungen, die zur Bearbeitung der Druckdaten gestellt werden und der Gegebenheiten wie zum Beispiel der Verfügbarkeit der Farbmanagementressourcen in einem nachgeschalteten Datenverarbeitungssystem, sehr unterschiedlich sein. Sie können zum Beispiel von einer einfachen, 1 Bit umfassenden Information, die angibt, ob der Druckjob mit Farbmanagementressourcen verarbeitet werden soll, über die Referenzierung von Farbmanagementressourcen oder Typen von Farbmanagementressourcen bis hin zu den konkreten Daten der Farbmanagementressource als solches reichen.

Weitere Vorteile und Wirkungen der Erfindung werden aus der nachfolgenden Beschreibung von Ausführungsbeispielen und den zugehörigen Figuren deutlich.

Es zeigen:
- Figur 1:: ein Dokumentenproduktionssystem,
- Figur 2:: ein Beispiel für eine indizierte Farbmanagementressource,
- Figur 3:: einen Verfahrensablauf zur Zuordnung von Farben in einem Druckauftrag,
- Figur 4:: Beispieldaten zur Festlegung ausgabegerätespezifischer Parameter in Dokumentendatenströmen,
- Figur 5:: Beispieldaten zur Charakterisierung verfügbarer Farbtöne in einem Ausgabegerät,
- Figur 6:: Beispieldaten zur Angabe der Verfügbarkeit entsprechender Farbtöne beim Duplexdruck,
- Figur 7:: Beispiele zur Charakterisierung von Farbtönen,
- Figur 8:: Beispiele von Farbpaletteneinträgen,
- Figur 9:: Beispiele von Farbmanagement Indexfarblisten,
- Figur 10:: Eine Datenstruktur für einen CMYK-Farbraum,
- Figur 11:: Eine Datenstruktur zum Ersetzen einer Farbpalette,
- Figur 12:: Eine IPDS-typische Triplett-Datenstruktur,
- Figur 13:: Eine Datenstruktur für Bilder, die aus mehreren Bildteilen bestehen und
- Figur 14:: Ein Verfahren zur Zuordnung von Farben eines vordefinierten Farbraums.

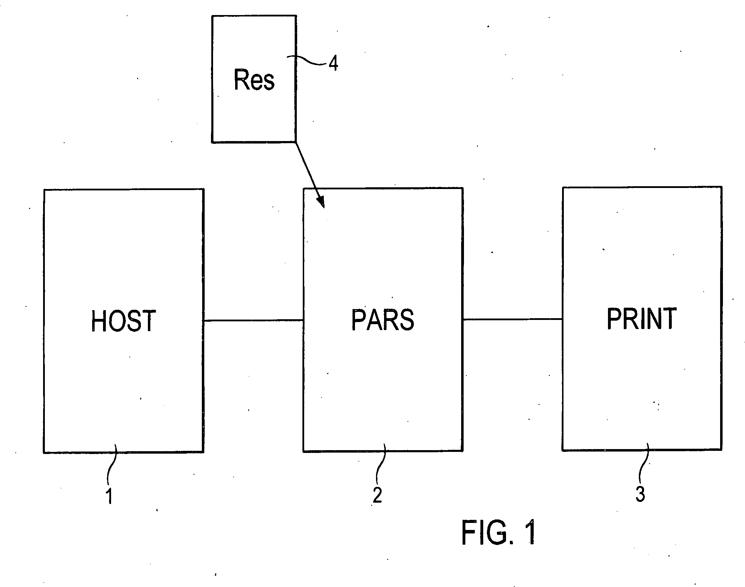

In Figur 1 ist ein Dokumentenerzeugungs- und -drucksystem dargestellt, das einen Host-Computer 1, einen Druckserver 2 und ein Hochleistungsdruckgerät 3 umfasst. Im Host-Computer 1 werden einerseits variable Druckdaten beispielsweise aus einer Datenbank heraus erzeugt und andererseits Ressourcen umfassend eine Pagedef-Datei und eine Formdef-Datei, aus denen ein Advanced Function Presentation Datenstrom gebildet wird. Der so erzeugte Dokumentendatenstrom wird dem Druckserver 2 zugeführt, in dem der Dokumentendatenstrom aufbereitet und in einen Intelligent Printer Data Stream (IPDS) zur Ausgabe an das Druckgerät 3 umgewandelt wird. Im Druckserver 2 laufen dazu mehrere Prozesse ab, die durch Softwaremodule gesteuert sind. Ein erstes Softwaremodul bindet weitere Ressourcendaten 4 wie zum Beispiel Fonts oder Overlays, die im originären Dokumentendatenstrom aufgerufen werden, in diesen ein. Ein zweites Softwaremodul, das Parsing-Modul, überprüft den Dokumentendatenstrom auf Konsistenz mit vorgegebenen Regeln. Dem Parsing-Vorgang vorgeschaltet ist ein Pre-Parsing-Vorgang, der von einem entsprechenden Softwaremodul durchgeführt wird, bei dem jedem Ressourcenaufruf und der zugeordneten Ressourcendatei zusätzlich zum Ressourcennamen ein Identifizierungsdatum zugeordnet wird, durch das die Ressource gegenüber allen anderen Ressourcen des Dokumentendatenstroms eindeutig gekennzeichnet ist. Innerhalb des Dokumentendatenstromes kann die Ressource dann mittels des Ressourcennamens und/oder des Identifizierungsdatums einmal oder mehrfach zur Darstellung der Dokumentendaten und der Ressourcendaten auf dem Druckgerät 3 aufgerufen werden. Die hier im Druckserver 2 dargestellten Prozesse können teilweise oder vollständig auch in einem Controller des Druckgeräts 3 durchgeführt werden. Im Druckgerät 3 wird der IPDS-Datenstrom gerastert und die Dokumente ausgedruckt.

Im gezeigten Ausführungsbeispiel enthält der AFP-Dokumentendatenstrom Dokumente, die dem MO:DCA-Standard entsprechen und die jeweils Referenzdaten zu Datenobjekten enthalten, die durch den Druckserver 2 verfügbar sind. Die Ressourcendaten 4 können dabei vom Host-Computer 1 an den Druckserver 2 getrennt von dem MO:DCA-Dokumentendatenstrom übertragen werden oder bereits im Druckserver 2 als externe Ressourcen gespeichert sein. Die Ressourcendaten können aber auch zusammen mit dem Dokumentendatenstrom vom Host-Computer 1 an den Druckserver 2 als eingebettete Ressourcendaten übertragen werden (sogenannte Inline Ressourcen). Weitere Details einer entsprechenden Datenverarbeitung sind in der WO-A1-2004/0008379 beschrieben. Die Ressourcendaten können sogenannte Datenobjektressourcen enthalten, die Objektdaten beinhalten, welche insbesondere mehrfach in identischer Weise im Dokumentendatenstrom referenziert werden. Derartige Datenobjekte können zum Beispiel Bilddaten, Textdaten und/oder Grafikdaten enthalten. Die Bezugnahme auf die Objektressourcen kann über eine Objektressourcenbibliothek erfolgen, die charakterisierende Daten zu dem Objekt enthält sowie Daten über dem Speicherort der entsprechenden Objektdaten. Die Bibliothek umfasst eine Datenobjektressourcen-Zugangstabelle (Data Object Resource Access Table RAT), die für den Druckserver 2 als Indextabelle für den Zugriff des Druckservers auf die Ressourcendaten wirkt.

Der Druckserver 2 empfängt den MO:DCA-Dokumentendatenstrom vom Host-Computer 1, konvertiert ihn in einen IPDS-Dokumentendatenstrom und sendet diesen an das Druckgerät 3. Im Zuge der Datenkonvertierung liest es aus dem MO:DCA-Dokumentendatenstrom die Referenzinformation (Name) eines Datenobjekts und greift mit Hilfe der Datenobjektressource-Zugriffstabelle (RAT) auf die gespeicherte Datenressource zu. Die vollständigen Daten des Objekts werden dann in den IPDS-Datenstrom integriert und an das Druckgerät 3 gesandt. Dieses Verfahren kann genauso gut angewandt werden, wenn die Daten statt an ein Druckgerät an ein anderes Ausgabegerät, zum Beispiel an einen Farbbildschirm, gesandt werden.

Ein MO:DCA-Dokumentendatenstrom ist in Datenelemente strukturiert, die weitgehend selbsterklärend sind. Strukturierte Felder (structured field), sind wichtige Bestandteile der MO:DCA-Struktur. Ein strukturiertes Feld ist in mehrere Teile gegliedert. Ein erster Teil (introducer) identifiziert das gewünschte Kommando, gibt die vollständige Länge des Kommandos an und spezifiziert zusätzliche Kontrollinformation, zum Beispiel ob zusätzliche auffüllende Bytes, sogenannte Padding-Bytes vorhanden sind. Die in einem strukturierten Feld enthaltenen Daten können als Fixparameter codiert sein, Wiederholungsinformationen beinhalten (repeating groups), Stichworte (Keywords) und sogenannte Triplets. Die Fixparameter entfalten ihre Wirkung nur für die Struktur, in der sie enthalten sind. Wiederholungsgruppen spezifizieren eine Gruppierung von Parametern, die mehrmals auftreten können. Stichworte sind selbsterklärende Parameter, die typischerweise zwei Bytes umfassen, wobei das erste Byte ein Identifikationsbyte für das Stichwort ist und das zweite Byte ein für das Stichwort charakterisierender Datenwert. Triplets sind selbsterklärende Parameter, die in einem ersten Byte eine Längenangabe, in einem zweiten Byte eine für das Triplet charakterisierende Identifizierungsinformation und dann bis zu 252 Datenbytes enthalten. Die genannten Datenstrukturen eines MO:DCA-Dokumentendatenstroms definieren einen Syntax, der im Zuge eines Parsingvorgangs auswertbar ist und flexibel erweiterbar ist.

MO:DCA-Datenströme sind weiterhin hierarchisch gegliedert, wobei in der obersten Hierarchiestufe Informationen enthalten sind, die sich auf den gesamten Datenstrom beziehen (print file component). In der nächsten Hierarchiestufe sind Dokumente definiert, welche hierarchiestufenweise heruntergebrochen werden auf mehrere Seiten umfassende Seitenbereiche (engl. page groups), Seiten und Seitenelemente, welche wiederum in Unterhierarchien zerfallen können. Die Seitenelemente sind dabei insbesondere Objekte, die aus verschiedenen Objektkomponenten bestehen, welche die niedrigste Hierarchiestufe darstellen. Objektkomponente können zum Beispiel Grafiken, Bilder, Darstellungstexte oder Barcodes sein.

Jede Hierarchiestufe des MO:DCA-Dokumentendatenstroms kann durch ein Paar von strukturierten Feldern einem Anfangsstrukturierten Feld und einem End-strukturierten Feld definiert werden. Dadurch ist es insbesondere möglich, dass ein Prozessor, der die Daten verarbeitet, ein Element ignorieren kann, das er nicht verarbeiten kann. Beispiele von solchen Beginn-End-Paaren sind die Paare "Begin Document" (BDT) und "End Document (EDT) oder "Begin Page" (BPG) und "End Page" (EPG).

Auch für Dokumentenobjekte, die über eine Ressource referenziert werden, sind entsprechende Paare strukturierter Felder vorgesehen, nämlich das strukturierte Feld "Begin Resource" (BRS) und "End Resource" (ERS). Innerhalb eines Ressourcenobjekts können weitere Ressourcenobjekte referenziert werden.

Zur Verarbeitung von farbbezogenen Informationen zu Dokumentenobjekten sind in der US 2005/0248787 A1 Farbmanagementressourcen (Color Management Resources CMR) vorgeschlagen worden. Sinngemäß sind verschiedene Typen von Farbmanagementressourcen vorgesehen:

Eine Farbkonversions-Farbmanagementressource (Color Conversion CMR), die eine geräteabhängige Farbe definiert, beispielsweise eine Farbe, die von einem Eingabegerät, wie zum Beispiel einem Scanner oder von einer wiedergegebenen Farbe eines Ausgabegerätes, wie zum Beispiel eines Druckgerätes, definiert. Die Farbe wird dabei auf Basis eines geräteunabhängigen Farbraums, wie zum Beispiel dem Farbraum CIELAB dargestellt. Dadurch kann eine Farbmanagementressource zum Beispiel Daten eines ICC-Farbprofils enthalten.

Eine weitere Farbmanagementressource ist die verbundene Farbkonvertierungs-Farbmanagementressource (Link Color Ccnversion CMR). Mit ihr wird eine Farbtransformation für ein farbiges Objekt definierbar, das mit einem ersten Gerät erzeugt bzw. aufgenommen wurde, das eine gerätespezifische Farbcharakteristik hat und mit einem zweiten Gerät ausgegeben wird, das eine gegenüber dem ersten Gerät unterschiedliche geräteabhängige Farbcharakteristik hat. Mit einer Verbindungsfarbkonversion CMR kann dann zum Beispiel die Konversion der Daten eines Objekts, das im RGB-Farbraum definiert ist, direkt in Daten erfolgen, die auf einem Druckgerät ausgegeben werden, das auf Basis des CMYK-Farbraums arbeitet. Mit einer entsprechenden Umrechnungstabelle (Look-up-Tabelle) können dabei die RGB-Dokumentendaten direkt in den CMYK-Raum konvertiert werden. Die Look-up-Tabelle ermöglicht dabei weiterhin, Farbcharakteristiken, insbesondere die ICC-Profile der beiden Geräte zum Erzeugen der RGB-Bilddaten (zum Beispiel einer Kamera) und des Ausgabegerätes (zum Beispiel eines Druckgerätes) direkt mit einzubeziehen, so dass die Farbtransformation sowohl zwischen den beiden Farbräumen als auch unter Berücksichtigung der beiden gerätespezifischen Farbprofile in einem Verarbeitungsschritt unter Verwendung der Look-up-Tabelle erfolgen kann. In Verbindung mit der vorliegenden Erfindung kann eine Link Color Conversion CMR vorteilhaft erzeugt und verwendet werden, beispielsweise, indem sie Transformationswerte enthält mit Eingangswerte der indizierte Farben bzw. Farbpalettenwerte direkt in Ansteuerungswerte für einen Prozessfarbendrucker enthält. Dies ist insbesondere dann vorteilhaft, wenn der Prozessfarbendrucker zwar die vier Grundfarben CMYK, aber nicht eine oder mehrere referenzierte HLC Farben enthält.

Ein weiterer CMR-Typ ist eine Halbtonabbildungsfarbmanagementressource (Half Tone Screen CMR). Mit einer solchen CMR wird definiert, wie digitalisierte Farbtonwerte einer Farbe in die digitalisierten Werte einer Farbe transformiert werden, die weniger Bits umfaßt, beispielsweise kann damit eine Umrechnung von einer Farbe, die in acht Bits beschrieben wird in einer Farbe erfolgen, die mit weniger als acht Bits beschrieben wird. Damit kann die Erscheinungsweise eines farbigen Dokuments bei der Ausgabe modifiziert bzw. angepaßt werden. Sogenannte Kalibrierungkurvenfarbmanagementressourcen (calibration curve CMR) definieren Informationen, mit denen Steuerungsparameter für eine Ausgabefarbe modifizierbar sind, beispielsweise kann die Helligkeit und/oder die Sättigung der Ausgabekomponente damit verändert werden.

Einem Dokumentenobjekt können mehrere Farbmanagementressourcen zugeordnet werden, bzw. zu diesem Dokumentenobjekt mehrere Referenzierungen in Farbmanagementressourcen erfolgen; beispielsweise kann für ein Dokumentenobjekt zunächst eine Operation mit einer Kalibrierungskurvenfarbmanagementressource angewandt werden und danach eine Maßnahme gemäß einer Halbtonabbildungsfarbmanagementressource.

Farbmanagementressourcen können insbesondere in IPDS-Dokumentendatenströmen als Objektcontainerressourcen (Object container resources) behandelt werden.

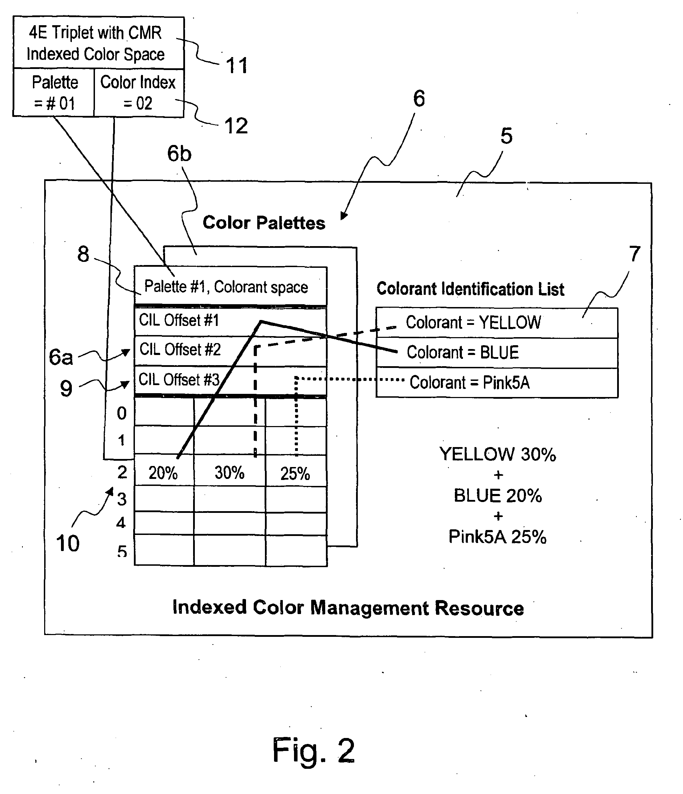

In Figur 2 ist ein Beispiel gezeigt, wie mit einem "4E"-Triplet eines MO:DCA-Datenstroms eine indizierte Farbe bzw. Farbmanagementressource angesteuert werden kann bzw. die dort gespeicherten Farbsteuerungsdaten aufgerufen werden können.

Eine indizierte Farbmanagementressource 5 enthält dazu Farbpalettendaten 6 und in einer Farbtonidentifizierungsliste 7 gespeicherte Daten zu individuellen Farbtönen bzw. Druckfarbstoffen, die zum Beispiel aus Toner oder Tinte bestehen können.

Die Farbpalettendaten sind in diesem Beispiel auf eine erste Farbpalette 6a und eine zweite Farbpalette 6b aufgeteilt, können jedoch statt dessen auch in einer entsprechend größeren einzigen Farbpalette integriert sein. Die Farbtonidentifizierungsliste 7 ist den Farbpaletten 6a bzw. 6b zugeordnet. Dazu enthalten die Daten der Identifizierungsliste Kenndaten für die individuellen Farbtöne, die entsprechenden Zuordnungsdaten in einem Farbtoninformationsbereich 9 der Farbpalette 6a zugeordnet sind. Zur Identifizierung der Farbpalette 6a ist eine Kopfinformation 8 vorgesehen. In einem Datenbereich 10 der Farbpalette 6a sind für die indizierten Farbwerte zu den drei Farbtönen bzw. ihren zugeordneten Farbdruckstoffen gelb (yellow), blau (blue) und pink 5a, die in der Farbtonidentifizierungsliste 7 aufgeführt sind, jeweils Werte hinterlegt, die entsprechenden Anteilen dieser drei Farbtöne zur Wiedergabe des indizierten Farbwerts entsprechen. Ein im MO:DCA-Datenstrom enthaltenes "4E"-Triplet, das die Index-Farbmanagementressource 5 referenziert, enthält Referenzierungsdaten 12, mit denen die in der Farbmanagementressource 5 hinterlegten Farbwerte abrufbar sind. Im gezeigten Beispiel besteht das Referenzierungsdatum aus einem ersten Byte, das der Palettennummer #01 entspricht und einem zweiten Byte #02, das die in der Palette indizierte Farbe referenziert. Die im gezeigten Beispiel referenzierte Indexfarbe Nummer 2 besteht aus einer Mischung der individuellen Farbtöne bzw. Farbdruckstoffe gelb zu 20 %, blau zu 30 % und pink 5a zu 25 %.

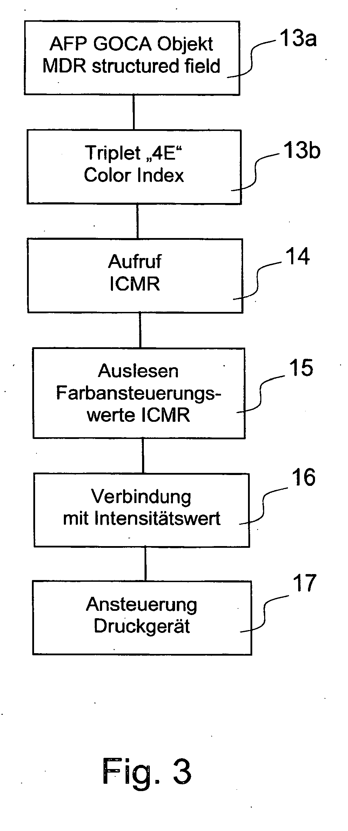

In Figur 3 ist ein Verfahren veranschaulicht, mit dem eine Farbzuordnung auf Basis indizierter Farbmanagementressourcen in einem GOCA Objekt 13a einer MO:DCA-Anwendung erfolgen kann. Das strukturierte Feld MDR enthält dabei im OEG dieses Object Containers eine Referenzinformation zur indizierten Farbmanagementressource 14. Weiterhin wird im "4E"-Triplet 13b ein Farbindex referenziert. Beim Interpretieren (parsing) des Datenstroms im Druckserver 2 wird auf Basis dieses Referenzierungswertes die entsprechende indizierte Farbmanagementressource im Schritt 14 aufgerufen und die entsprechenden Farbansteuerungswerte für die entsprechenden Farbtöne aus der indizierten Farbmanagementressource im Schritt 15 ausgelesen. Der genannte Schritt kann alternativ zum Druckserver auch im Druckgerät erfolgen. Vor dem Ausgeben des Datenstroms auf dem Druckgerät werden die aus der indizierten Farbmanagementressource gelesenen Werte zusätzlich mit Intensitätswerten überlagert, die den entsprechenden Bildpunkten zugewiesen sind (Schritt 16); die der Farbtonidentifikationsliste 7 entsprechenden Farbdruckstationen des Druckgeräts werden im Schritt 17 entsprechend angesteuert.

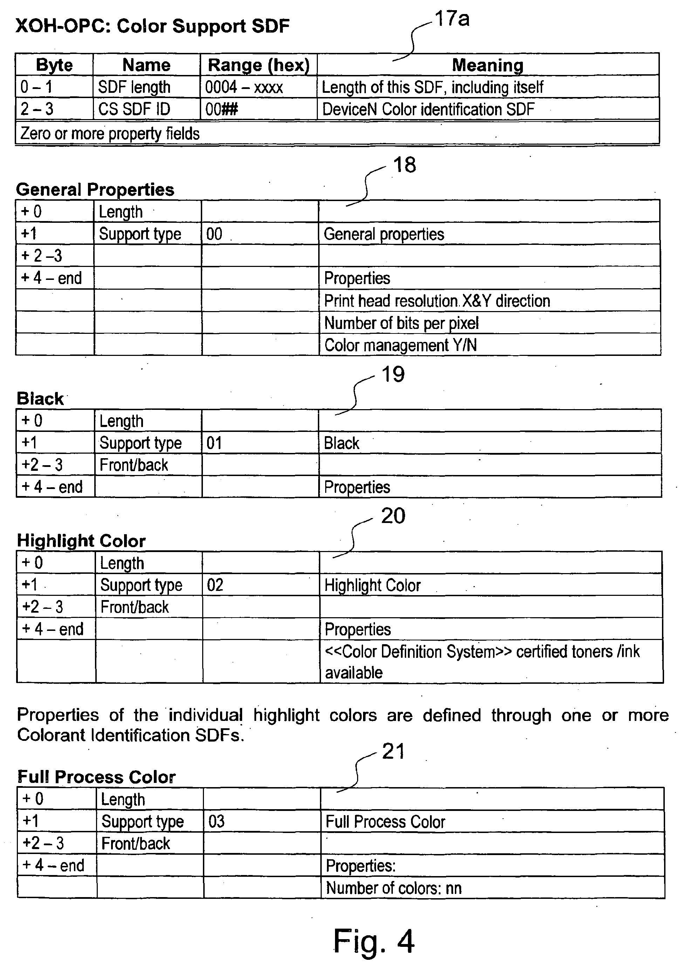

In AFP, MO:DCA und IPDS Datenströme sind Strukturelemente vorgegeben, sogenannte Ausgabegeräteeinrichtungen (Screen Device Facilities, SDF) vorgesehen, mit denen ausgabegerätsspezifische Einstellungen bzw. Festlegungen übertragen bzw. vorgenommen werden können. In Figur 4 ist ein Beispiel dargestellt, wie für diese Datenströme entsprechende Übertragungsfelder vorgesehen werden können, mit denen Eigenschaften von Ausgabegeräten, insbesondere deren Fähigkeit Farbinformationen auszugeben, dargestellt werden können. Das entsprechende Datenstrukturfeld für ein derartiges SDF und dessen Eigenschaften (Zahl der Bytes, Name, Gültigkeitsbereich der Werte (Range) und Datenbedeutung (meaning)) sind in der Tabelle 17a dargestellt. In den Tabellen 18, 19, 20 und 21 sind Bespiele für entsprechende weitere Datenwerte des SDF-Feldes angegeben, nämlich in Tabelle 18 Daten zu allgemeinen Eigenschaften des Ausgabegeräts (insbesondere Druckgeräte), in Tabelle 19 für ein Gerät, das nur schwarz/weiß wiedergeben kann, in Tabelle 20 für ein Gerät, das mindestens eine Highlight-Color-Farbe wiedergeben kann und in Tabelle 21 Informationen enthält, die ein Ausgabegerät charakterisieren, das Vollfarbdaten wiedergeben kann.

Die Daten entsprechend der Figur 4 können für ein Ausgabegerät (zum Beispiel Druckgerät)einmalig erfasst und verwendet werden, solange sich die entsprechende Charakteristik des Ausgabegeräts nicht verändert. Die Speicherung kann im Druckgerät selbst, in einem mobilen Datenträger, wie zum Beispiel einer CD-ROM, in einem Druckserver oder in einem Anwendercomputer, einschließlich eines Host-Computers gespeichert werden, der Dokumentendaten erzeugt. Die entsprechenden Daten können selbstverständlich auch über Datennetzwerke wie Intranet oder Internet übertragen werden. Diese Daten können genauso wie die nachfolgend genannten, Farbeigenschaften einer Druckgeräts näher charakterisierende Daten, dazu verwendet werden, um Farbmanagementressourcen, insbesondere indizierte Farbmanagementressourcen zu erzeugen. Die Farbmanagementressourcen können dabei insbesondere in Ressourcenbibliotheken gespeichert werden. Dies kann beispielsweise gemäß den in der US 2005/0248787 A1 genannten Verfahren erfolgen und zum Beispiel mit den darin in Figur 3 gezeigten Komponenten eines Farbmanagementressourcen-Installierungssystems (CMR Installer, Bezugszeichennummer 301), einer Color Engine (CEE, Bezugszeichennummer 303) unter Verwendung einer Ressourcenzugangstabelle (Ressource Access Table RAT, Bezugszeichennummer 304).

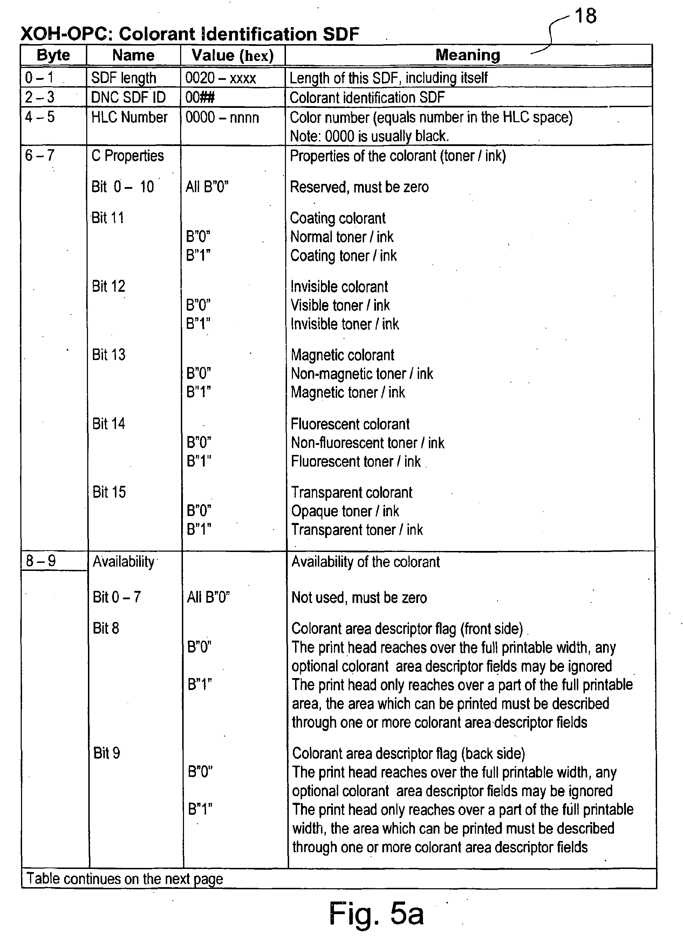

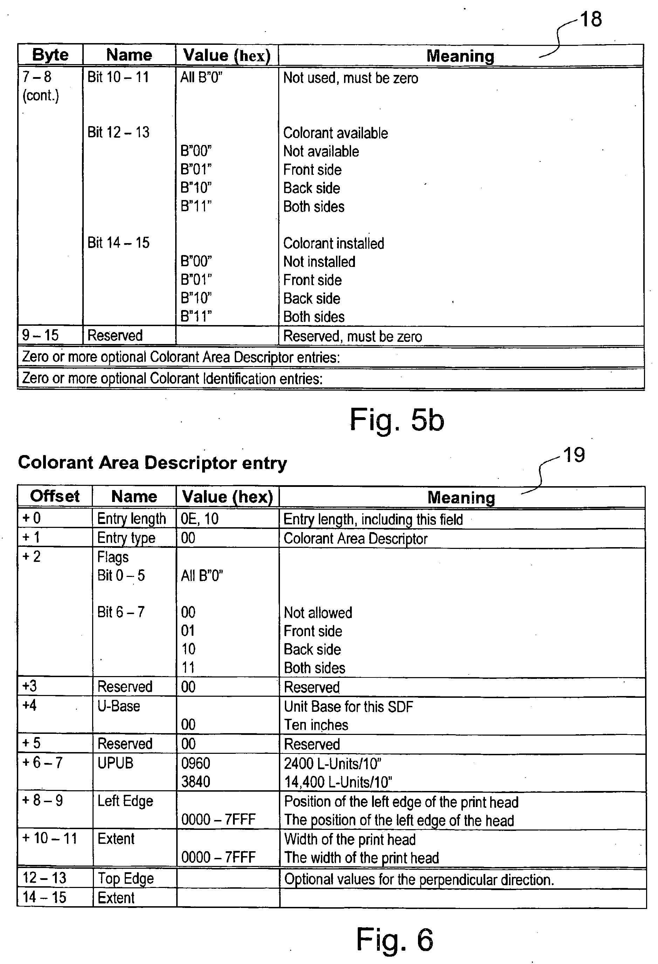

In Figur 5 ist ein Beispiel für eine SDF-Struktur gezeigt, mit der Farbtöne charakterisiert werden können, die als Grundfarben in einem Ausgabegerät vorhanden sind. Beispielsweise können dies die Farben verschiedener Toner in einem elektrografischen Druckgerät oder die Farben verschiedener Tinten in einem Tintenstrahldrucker sein oder auch die Farben verschiedener Leuchtstoffe in einem Bildschirm. Die Farben können dabei individuelle Farbtöne aufweisen, insbesondere Highlight-Color Farbtöne. Die in Figur 5 vorgeschlagene Farbton-Identifizierungstabelle 18 erstreckt sich über die Teilfiguren 5a und 5b. In den Bytes 2 bis 3 ist die Identifizierungskennung des Farbtons hinterlegt. In den Bytes 4 bis 5 kann eine spezielle Nummer für einen HLC-Farbraum hinterlegt werden, die diese Farbe im Highlight-Color Raum identifiziert. In den Bytes 6 bis 7 können zusätzliche Eigenschaften des Farbtons (bzw. gegebenenfalls des betreffenden Druckfarbstoffs Toner bzw. Tinte) hinterlegt werden, beispielsweise seine Beschichtungseigenschaften (Coding Colorant), seine Sichtbarkeit (Invisible Colorant), seine magnetischen Eigenschaften (Magnetically Colorant), seine fluoreszierenden Eigenschaften (Fluorescence Colorant) und seine Transparents-Eigenschaft (Transparency Colorant. In den Bytes 8 bis 9 kann eine Kennung hinterlegt werden, die beschreibt, ob die Farbe über die gesamte Druckbreite oder nur einen Teil der Druckbreite verfügbar ist.

In Figur 6 ist speziell für Druckanwendungen ein SDF-Eintrag vorgesehen, mit dem angebbar ist, ob der entsprechende Farbton auf der Vorderseite und/oder der Rückseite beim Bedrucken eines Aufzeichnungsträgers verfügbar ist.

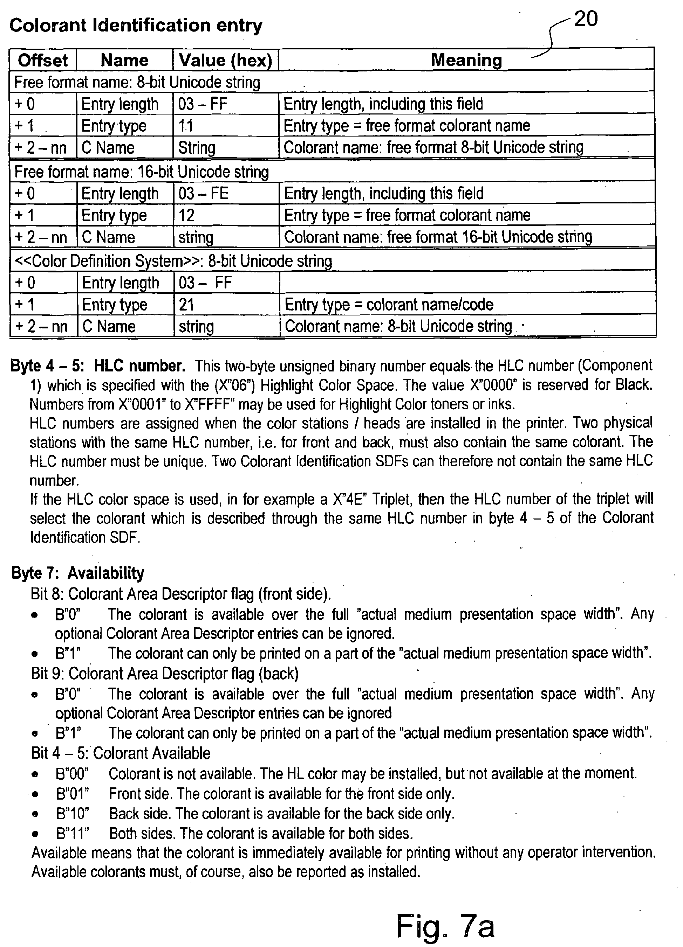

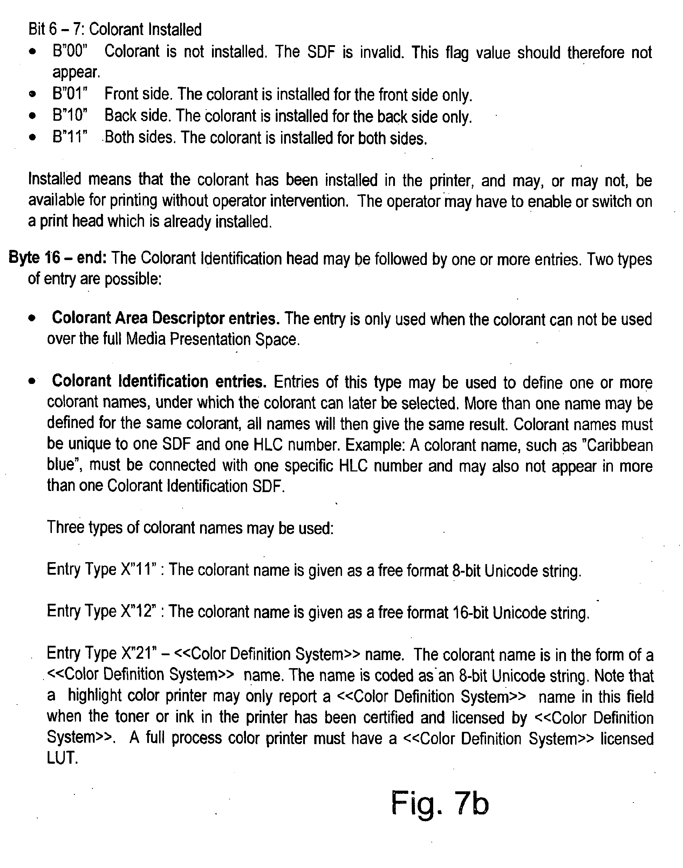

In Figur 7, die sich über die Teilfiguren 7a und 7b erstreckt, ist dargestellt, welche Informationen in einer indizierten Farbmanagementressource zur Charakterisierung von individuellen Farbtönen vorgesehen werden können, die die in Figuren 5 und 6 bereits dargestellten Informationen weiter ausgestalten. Zur Identifizierung des Farbtons ist zum einen eine Farbtonnummer (Bytes 4 bis 5) vorgesehen, zum anderen frei wählbare, einen 8-Bit oder 16-Bit-Unicode-String codierbare Namen. Dabei kann auch vorgesehen sein, Farbtöne, die bereits in einem standardisierten Farbkatalog wie zum Beispiel Pantone® oder RAL® definiert sind, gesondert zu bezeichnen bzw. zu codieren und damit unmittelbar zu erkennen.

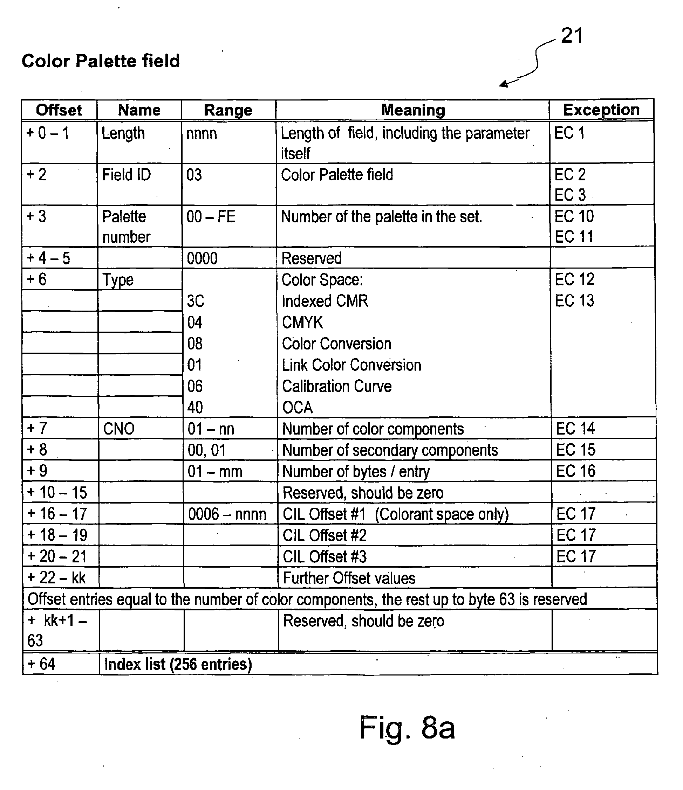

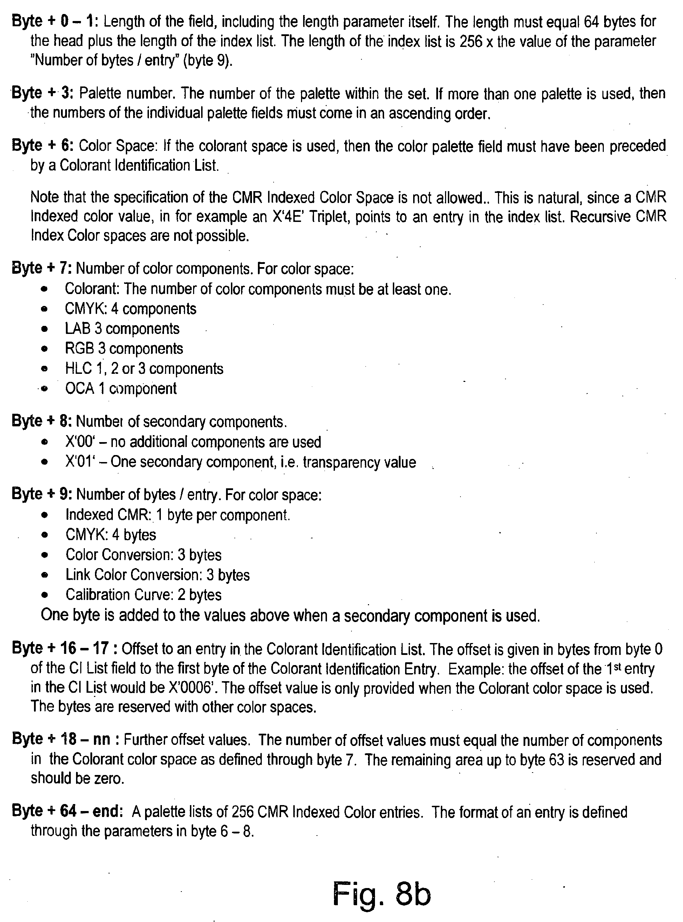

Figur 8a zeigt eine Tabelle 21, die einem Farbpaletteneintrag bzw. einem Farbpalettenfeld in einer indizierten Farbmanagementressource, die nur eine Farbpalette enthält, byteweise entspricht. Die in der ersten Tabellenzeile unter der Überschriftenzeile gezeigten Längen-Bytes bezeichnen die Länge des gesamten Eintrags. Die Bytes mit dem Namen "Type" geben an, für welchen Farbraum die Palette vorgesehen ist, nämlich für den Farbraum Color Conversion, Link Color Conversion, Half Ton Screen, Calibration Curve oder Indexed CMR. In der Zeile mit dem Namen "CNO" ist die Zahl der verfügbaren Farbtonkomponenten angegeben und in den Zeilen ab dem Offsetwert +16 sind die Farbtöne im einzelnen referenziert. In Figur 8b sind Details zu der in Figur 8a gezeigten Farbpalettenfeld-Tabelle 21 bzw. den in ihr aufgeführten, nach Offset-Nummern geordneten Bytes dargestellt.

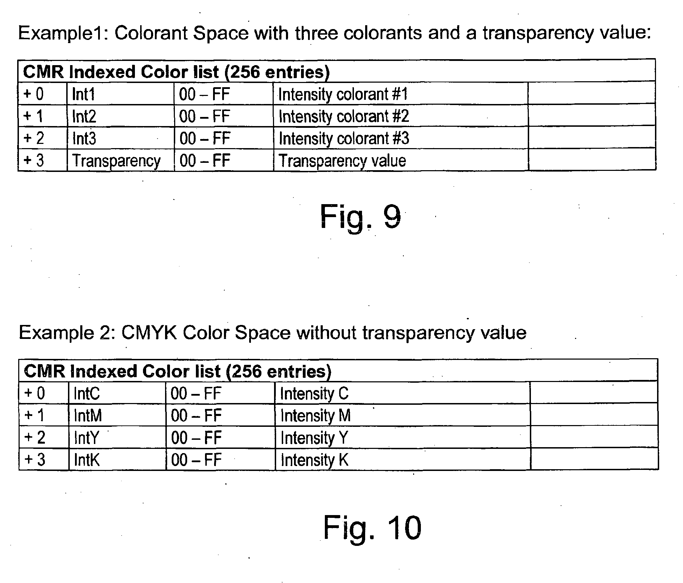

Figur 9 zeigt ein Beispiel für Informationen, die als Datenstruktur in einer indizierten Farbmanagementressource enthalten sind, bei der ein individueller Farbraum aus drei individuellen Farbtönen und einem Transparentwert gebildet wird. In Figur 10 ist eine entsprechende Datenstruktur für einen CMYK-Farbraum ohne einen Transparentwert gezeigt.

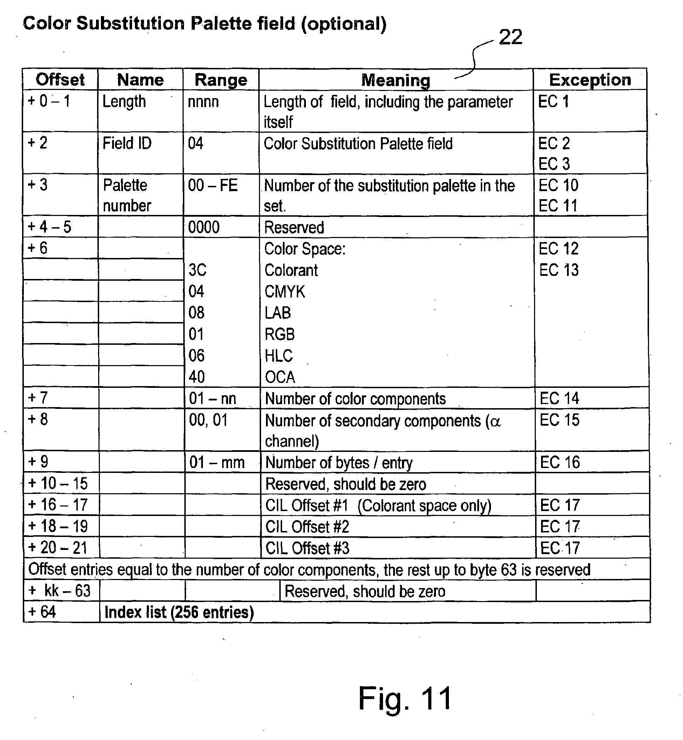

In Figur 11 ist eine Datenstruktur dargestellt für ein Farbpalettenfeld, das Einträge zum Ersetzen einer ersten Farbe durch eine zweite Farbe enthält. In einer Farbmanagementressource können eine oder mehrere solcher Farbersetzungspaletten enthalten sein. Die Farbersetzungspalette wird benutzt, wenn eine ursprünglich referenzierte Farbpalette für das Ausgabegerät nicht geeignet ist, zum Beispiel wenn die referenzierte Farbpalette einen Farbton definiert, der von einem Druckgerät, das auch ein Vollfarbdruckgerät sein kann, nicht wiedergegeben werden kann oder wenn eine Farbpalette mit verschiedenen Farben referenziert ist, das Druckgerät aber ein Schwarz/Weiß-Druckgerät ist. Die Verwendung von derartigen Substitutionspaletten kann von einer Systemsteuerung unterbunden werden, insbesondere wenn die Systemsteuerung eine sogenannte Farbtreuefunktion aufweist (engl. Color Fidelity Function), die zum Beispiel bei der Verarbeitung von Druckaufträgen sicherstellt, dass Druckaufträge nur dann auf den Druckgeräten ausgegeben werden, wenn die Druckgeräte in der Lage sind, exakt die im Druckauftrag referenzierten Farben wiederzugeben. Falls die Color Fidelity Funktion aktiviert ist und im Druckgerät die referenzierten Farbstoffe nicht zur Verfügung stehen kann eine Fehlermeldung und/oder ein Druckstopp veranlasst werden.

In einer Farbmanagementressource ist es vorteilhaft, wenn die Substitutionsfarbpalette unmittelbar hinter der entsprechenden Farbpalette mit der selben Palettennummer abgespeichert bzw. referenziert ist. Wenn mehrere Substitutionspaletten geladen sind, dann kann ihre Verwendung hierarchisch gesteuert werden, zum Beispiel dadurch, dass die Farbsubstitutionspaletten der Reihe nach abgearbeitet werden und die erste Farbpalette verwendet wird, die für das Ausgabegerät geeignet ist. Wenn keine der Farbpaletten geeignet ist, kann das Druckgerät die Farbzuordnung gemäß seinem Standard ausführen oder eine Fehlermeldung bis hin zu einem Druckstop generiert werden.

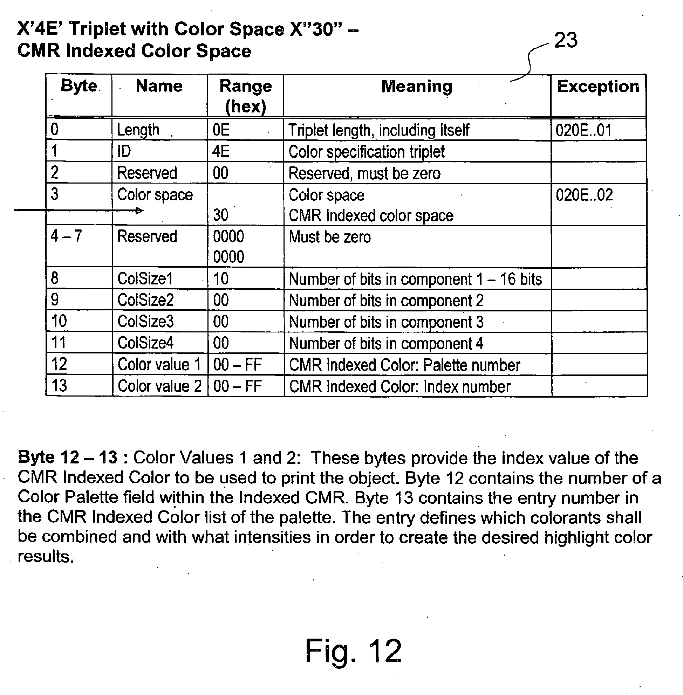

In Figur 12 ist die Datenstruktur eines X'4E'Triplets dargestellt, das mit verschiedenen IPDS-Kommandos, wie zum Beispiel "Load Page Descriptor", "Right image Control 2", "Right Graphics Control", "Object Container Control", "Include Data Object" oder "Presentation Space (Page, Overlay, OC, IOCA, GOCA, BCOCA) verwendet werden kann.

Das gemäß der bisher geltenden IPDS-Spezifikation bestehende X'4E' Triplet kann dabei zum Beispiel im Byte Nummer 3 (Color Space) um den Wert 30 (Hex) erweitert werden, der angibt, dass eine indizierte Farbmanagementressource referenziert wird. Dadurch wird ein erweiterter Farbraum, der sogenannte indizierte Farbraum, adressierbar, in dem insbesondere Highlight-Farben, Spot-Farben und individuelle Spezial-Farbtöne (Named Colors) adressierbar sind. In Figur 12 sind weitere Erläuterungen zu den Bytes 3 und 12 bis 13 des Triplets angegeben.

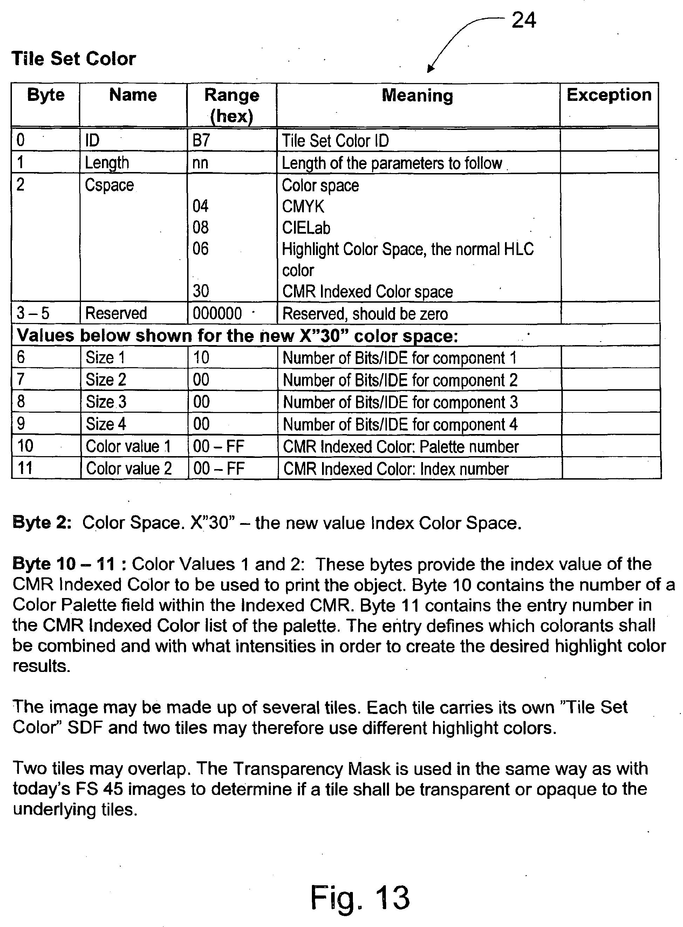

In Figur 13 ist eine Datenstruktur dargestellt, mit der Dokumentenobjekte, insbesondere Bilder individuell mit indizierten Farbmanagementressourcen auch dann verarbeitet werden können, wenn die Bilder aus mehreren Bildteilen (Tiles) bestehen. Jedes Bildteil kann dann seine eigene Teilsetfarben SDF tragen und verschiedene Bildteile mit verschiedenen Farbkomponenten, insbesondere Highlight-Farben, eingefärbt werden.

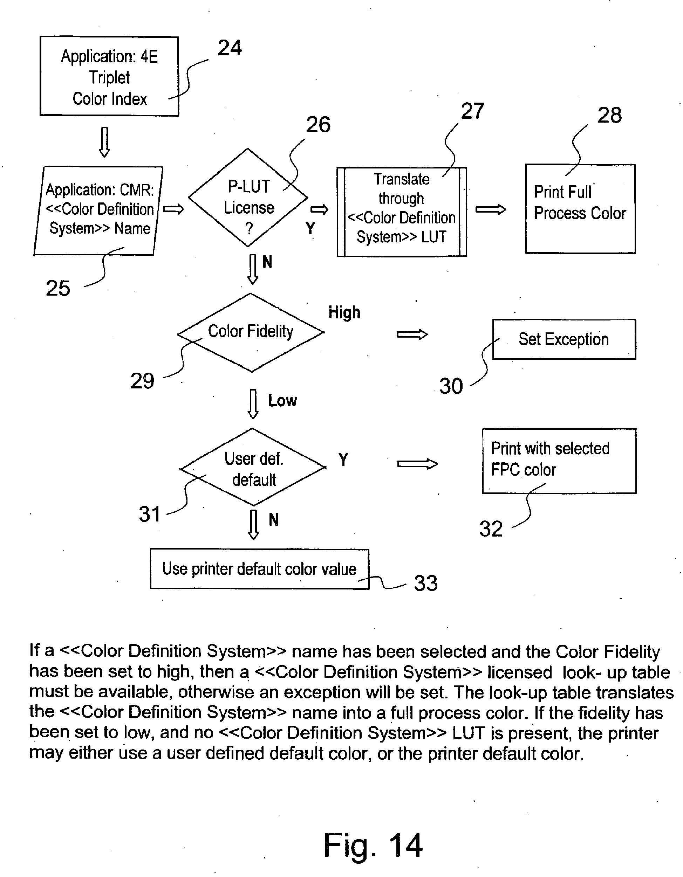

Figur 14 zeigt eine Verfahrensweise, bei der mittels eines X'4E'Triplets die Farbzuordnung getroffen werden kann, wenn Farben aus einem vordefinierten Farbsystem (engl. Color Definition System) wie zum Beispiel dem Pantone® Farbdefinitionssystem oder dem RAL® Farbdefinitionssystem referenziert sind. Über die Referenzierung 24 wird der spezielle Farbname als Text bzw. als Nummer angesprochen und in der Anwendung im Schritt 25 erkannt. Dann wird im Schritt 26 geprüft, ob für diese eine Farbtransformationstabelle (LUT) verfügbar ist und gegebenenfalls im Schritt 27 die Farbtransformation vorgenommen und anschließend im Schritt 28 der Druckvorgang in Vollfarbe durchgeführt wird. Falls im Schritt 26 festgestellt wird, dass die Umrechnungstabelle nicht verfügbar ist, wird in einem Schritt 29 geprüft, ob im System die Einstellung "Farbtreue" (Color Fidelity) getroffen wurde. Gegebenenfalls wird eine Meldung ausgegeben, dass diese Einstellung eingestellt ist und die Ausgabe bis auf weiteres blockiert werden kann (Schritt 30). Falls die Option "Color Fidelity" nicht eingestellt ist, kann im Schritt 31 geprüft werden, ob zu der referenzierten Farbe eine Substitutionsfarbpalette (vgl. Figur 11) definiert ist und gegebenenfalls im Schritt 32 das Objekt bzw. Dokument mit dieser Farbpalette im Schritt 32 gedruckt wird. Falls auch keine Ersatzfarbpalette herangezogen werden kann, wird das Objekt bzw. Dokument im Schritt 33 mit dem standardmäßigen Einstellungen des Ausgabegeräts (Druckers) ausgegeben.

Obwohl die Erfindung vorab vorwiegend anhand der Datenströme AFP, MO:DCA und IPDS beschrieben wurde ist klar, dass die ihr entsprechenden Konzepte auch auf andere Dokumentendatenströme wie zum Beispiel PCL, Post Script, PDF, LCDS und PPML (Personalized Printer Markup Language) anwendbar sind; insbesondere, wenn diese bereits Ressourcendaten und entsprechende Aufrufe vorsehen. Es können aber auch Datenströme, die bisher keine Ressourcendaten vorsehen, um geeignete Ressourcenstrukturen und Aufrufe erweitert werden.

Die für die bestehenden Datenstromspezifikationen zu AFP, MO:DCA und IPDS insbesondere in den Ausführungsbeispielen angegebenen, konkreten Erweiterungsvorschläge wie zum Beispiel die bei Figur 12 angegebene Erweiterung des X'4E' Triplets um den Wert 30 (Hex), sind nur als unverbindliche Beispiele zu verstehen und die Grundkonzepte der Erfindung sind in diesen Datenströmen selbstverständlich auch durch andere, konkrete Erweiterungsfestlegungen erreichbar.

Die Erfindung ist insbesondere dazu geeignet, als Computerprogramm (Software) realisiert zu werden. Sie kann damit als Computerprogramm-Modul, als Datei auf einem Datenträger wie einer Diskette, DVD- oder CD-ROM, oder als Datei über ein Daten- bzw. Kommunikationsnetz verbreitet werden. Derartige und vergleichbare Computerprogramm-Produkte oder Computerprogramm-Elemente sind Ausgestaltungen der Erfindung. Der erfindungsgemäße Ablauf kann in einem Computer, in einem Druckgerät oder in einem Drucksystem mit vorgeschalteten oder nachgeschalteten Datenverarbeitungsgeräten Anwendung finden. Dabei ist klar, daß entsprechende Computer, auf denen die Erfindung angewandt wird, weitere, an sich bekannte technische Einrichtungen wie Eingabemittel (Tastatur, Mouse, Touchscreen), einen Mikroprozessor, einen Daten- bzw. Steuerungsbus, eine Anzeigeeinrichtung (Monitor, Display) sowie einen Arbeitsspeicher, einen Festplattenspeicher und eine Netzwerkkarte enthalten können.

### Bezugszeichenliste

- 1: Host-Computer
- 2: Druckserver
- 3.: Druckgerät
- 4: Ressourcen-Daten
- 5: Indizierte Farbmanagementressource
- 6: Farbpaletten-Daten
- 6a, 6b: Farbpaletten
- 7: Farbtonidentifizierungsliste
- 8: Kopfinformation
- 9: Farbtoninformation
- 10: Indexdaten
- 11: '4E'-Triplet
- 12: Referenzierungsdaten
- 13: '4E'-Triplet-Aufruf
- 14: Aufruf ICMR
- 15: Auslesen ICMR
- 16: Ansteuerung Druckgerät
- 17: Farbansteuerung
- 17a: SDF-Tabelle
- 18: Farbton-Identifizierungstabelle
- 19: Druckbereich-Tabelle
- 20: Farbton-Charakterisierungstabelle
- 21: Farbpalettenfeld-Tabelle
- 22: Farbsubstitutions-Tabelle
- 23: Angepasstes X'4E'-Triplet
- 24a: Teilbild-Datenstruktur
- 24b: Referenzierung
- 25: Farbnamenerkennung
- 26: LUT-Prüfung
- 27: Farbtransformation
- 28: Druckprozess
- 29: Farbtreue-Prüfung
- 30: Ausnahmezustand setzen
- 31: Substitutionsprüfung
- 32: Druckvorgang
- 33: Druckvorgang mit Standardwerten

## Patentansprüche

1. Verfahren zum Erzeugen und/oder Verarbeiten eines Dokumentendatenstroms, der auf Farbmanagementressourcen bezogene Daten umfasst, mit denen die Verarbeitung farbbezogener Daten des Dokumentendatenstroms steuerbar ist, wobei dem Dokumentendatenstrom mindestens eine indizierte Farbmanagementressource zugeordnet ist, mit der farbbezogene Daten des Dokumentendatenstroms mehreren vorgegebenen Farbpaletten zuordenbar sind, wobei innerhalb einer Farbpalette jeweils zu mehreren Farben ein Indexwert zugeordnet ist, wobei in der Farbmanagementressource zu den indizierten Farben jeweils Werte hinterlegt sind, die entsprechenden Anteilen von Farbtönen zur Wiedergabe der jeweils indizierten Farbe zugeordnet sind, wobei die Farbpaletten systemübergreifend zwischen einem System, das die Dokumentendaten erzeugt, und einem Ausgabesystem, das die Dokumentendaten ausgibt, abgeglichen sind, und wobei der Dokumentendatenstrom gemäß der Spezifikation AFP, MO:DCA und/oder IPDS strukturiert ist.

2. Verfahren nach Anspruch 1, wobei die indizierte Farbmanagementressource eine codierte Information enthält, die der Anzahl der in der indizierten Farbmanagementressource verfügbaren Prozessfarbpaletten zugeordnet ist.

3. Verfahren nach einem der vorhergehenden Ansprüche, wobei die indizierte Farbmanagementressource prozessfarbpalettenweise eine codierte Information enthält, die angibt, welche insbesondere in einem Ausgabesystem verfügbaren und/oder in einem Farbsystem wie RGB, YMCK definierten Farbtöne zur Wiedergabe der Prozessfarben der jeweiligen Prozessfarbpalette benötigt werden.

4. Verfahren nach Anspruch 3, wobei die codierte Information einem Klartext-Namen eines Farbtons und/oder einer Farbtonnummer eines vorgegebenen Farbdefinitionssystems wie zum Beispiel Pantone® oder RAL® zugeordnet ist.

5. Verfahren nach einem der vorhergehenden Ansprüche, wobei die indizierte Farbmanagementressource und/oder ihr zugeordnete Daten des Dokumentendatenstroms prozessfarbpalettenweise eine codierte Information über die im Dokumentendatenerzeugungs- und/oder -verarbeitungsprozess und/oder im Ausgabegerät verfügbaren Prozessfarben enthält.

6. Verfahren nach einem der vorhergehenden Ansprüche, wobei die indizierte Farbmanagementressource eine codierte Information enthält, die angibt, zu welcher zweiten Farbpalette Daten des Dokumentendatenstroms neu zugeordnet werden, wenn sie auf einem Ausgabegerät mit der ursprünglichen Zuordnung zu einer ersten Farbpalette nicht wiedergebbar sind.

7. Verfahren nach einem der vorhergehenden Ansprüche, wobei der Dokumentendatenstrom von einem Druckserver an ein Druckgerät ausgegeben wird.

8. Verfahren nach Anspruch 7, wobei die Verarbeitungsschritte der Farbzuordnung zumindest teilweise im Druckserver und/oder im Druckgerät durchgeführt werden.

9. Verfahren nach einem der vorhergehenden Ansprüche, wobei beim Verarbeiten des Dokumentendatenstroms geprüft wird, ob eine im Datenstrom mittels eines Indexcodes referenzierte, in der Farbmanagementressource definierte Farbe und/oder Farbpalette im Ausgabegerät verfügbar ist, bevor die Ausgabe erfolgt.

10. Verfahren nach einem der vorhergehenden Ansprüche, wobei die Farbmanagementressource eine Kennung enthält, die einer Farbpalette zugeordnet ist, wobei die Farbpalette einem Farbraum zugeordnet ist.

11. Verfahren nach Anspruch 10, wobei die Kennung einem der Farbräume "Individualfarbtöne", CMYK, CIELAB, RGB oder Grautöne zugeordnet ist.

12. Verfahren nach Anspruch 11, wobei in der Farbmanagementressource zum Farbraum "Individualfarbtöne" codierte Informationen enthalten sind, die die in diesem Farbraum definierten Farbtöne repräsentieren.

13. Verfahren nach einem der Ansprüche 11 oder 12, wobei zur Erstellung der Daten zum Individualfarbton-Farbraum in der Farbmanagementressource die in einem Ausgabegerät verfügbaren Grundfarbtöne vom Ausgabegerät an ein zur Erstellung der Farbmanagementressource vorgesehenes System übertragen werden.

14. Verfahren nach einem der vorhergehenden Ansprüche zum Erzeugen und/oder Verarbeiten eines ressourcenbasierten Dokumentendatenstroms, mit dem die Ausgabe mindestens eines Dokuments auf einem Ausgabemedium steuerbar ist, wobei der Dokumentendatenstrom auf mindestens eine Farbmanagementressource bezogene Ressourcenbezugsdaten und auf das Ausgabemedium bezogene Mediumbezugsdaten enthält und wobei die Ressourcenbezugsdaten und die Mediumbezugsdaten derart logisch miteinander verbunden werden, dass bei einem Wechsel einer Bezugnahme auf ein Ausgabemedium innerhalb des Dokumentendatenstroms automatisch ein Wechsel der Bezugnahme auf eine Farbmanagementressource erfolgt.

15. Verfahren nach Anspruch 14, wobei die Farbmanagementressource zur Verarbeitung farbbezogener Daten von Dokumentendatenströmen und zur Ausgabe der Dokumentendaten auf dem Ausgabemedium an Eigenschaften des Ausgabemediums angepaßten Daten enthält.

16. Verfahren nach Anspruch 15, wobei das Ausgabemedium ein Aufzeichnungsträger ist und in der Farbmanagementressource Aufzeichnungsträgerdaten zu dessen Farbe, Helligkeit, Gewicht und/oder Oberflächeneigenschaft vorgesehen sind.

17. Verfahren nach einem der vorhergehenden Ansprüche, wobei Daten, die auf Farbmanagementressourcen bezogen sind, als Auftragsbegleitdaten in einer insbesondere vom übrigen Dokumentendatenstrom getrennten Datei vorgesehen werden.

18. Verfahren nach Anspruch 17, wobei die Auftragsbegleitdaten, deren Datei und/oder weitere Auftragsbegleitdaten gemäß der Spezifikation des Job Definition Formats aufgebaut sind.

19. Computerprogrammprodukt, das bei seinem Laden und Ausführen auf einem Computer.einen Verfahrensablauf nach einem der vorhergehenden Ansprüche bewirkt.

20. Computer zum Erzeugen und/oder Verarbeiten eines Dokumentendatenstroms umfassend Mittel zum Durchführen eines Verfahrens nach einem der Ansprüche 1 bis 18.

21. Vorrichtung umfassend einen Controller zur Verarbeitung eines Dokumentendatenstroms, der gemäß einem der Ansprüche 1 bis 18 erzeugt wurde, wobei der Controller die auf eine indizierte Farbmanagementressource bezogenen Daten zur Bildung von Ansteuerungssignalen verwendet, die zur Ansteuerung einer Ausgabeeinheit geeignet sind.

22. Vorrichtung nach Anspruch 21, wobei die Ausgabeeinheit ein Druckgerät ist und die Ansteuerungssignale oder von ihnen abgeleitete Daten zur Auswahl von in dem Druckgerät enthaltenen Druckfarbstoffen in mindestens einem Druckwerk verwendet werden.

23. Vorrichtung nach Anspruch 22, wobei das Druckwerk eine elektrografische Entwicklerstation umfasst und der Druckfarbstoff aus Toner besteht.

## Claims

1. A method to generate and/or process a document data stream that comprises data relating to colour management resources, with which data the processing of colour-related data of the document data stream can be controlled, wherein at least one indexed colour management resource is associated with the document data stream, with which indexed colour management resource colour-related data of the document data stream can be associated with several predetermined colour palettes, wherein within a colour palette one index value each being assigned to several colours, wherein in the colour management resource values are deposited for each of the indexed colours, which values are associated with corresponding portions of colour tones for the reproduction of the respective indexed colour, wherein the colour palettes are matched in a cross-system manner between a system which generates the document data and an output system which outputs the document data, and wherein the document data stream is structured according to the specification AFP, MO:DCA and/or IPDS.

2. The method according to claim 1, wherein the indexed colour management resource contains encoded information that is associated with the number of process colour palettes available in the indexed colour management resource.

3. The method according to one of the preceding claims, wherein the indexed colour management resource contains one item of encoded information per process colour palette that specifies which colour tones available in particular in an output system and/or defined in a colour system such as RGB, YMCK are required to reproduce the process colours of the respective process colour palette.

4. The method according to claim 3, wherein the encoded information is associated with a plain text name of a colour tone and/or a colour tone number of a predetermined colour definition system such as, for example, Pantone® or RAL®.

5. The method according to one of the preceding claims, wherein the indexed colour management resource and/or its associated data of the document data stream contains, per process colour palette, one item of encoded information about the process colours available in the document data generation process and/or document data processing process and/or in the output device.

6. The method according to one of the preceding claims, wherein the indexed colour management resource contains encoded information that indicates with which second colour palette data of the document data stream are re-associated when they cannot be reproduced on an output device with the original association with a first colour palette.

7. The method according to one of the preceding claims, wherein the document data stream is output from a print server to a printing device.

8. The method according to claim 7, wherein the processing steps of the colour association are implemented at least in part in the print server and/or in the printing device.

9. The method according to one of the preceding claims, wherein in the processing of the document data stream it is checked whether a colour and/or colour palette referenced in the data stream by means of an index code and defined in the colour management resource is available in the output device, which check occurs before the output.

10. The method according to one of the preceding claims, wherein the colour management resource contains an identifier that is associated with a colour palette, wherein the colour palette is associated with a colour space.

11. The method according to claim 10, wherein the identifier is associated with one of the colour spaces "Individual colour tones", CMYK, CIELAB, RGB or grey tones.

12. The method according to claim 11, wherein the colour management resource contains encoded information with respect to the colour space "Individual colour tones", which information represents the colour tones defined in this colour space.

13. The method according to one of the claims 11 or 12, wherein the primary colour tones available in an output device are transferred from the output device to a system provided to generate the colour management resource for generation of the data regarding the individual colour tone colour space in the colour management resource.

14. The method according to one of the preceding claims for generation and/or processing of a resource-based document data stream with which the output of at least one document on an output medium can be controlled, wherein the document data stream contains resources reference data concerning at least one colour management resource and medium reference data concerning the output medium, and wherein the resource reference data and the medium reference data are logically linked with one another such that a change of the reference to a colour management resource automatically occurs given a change of a reference to an output medium within the document data stream.

15. The method according to claim 14, wherein the colour management resource contains data adapted to properties of the output medium for processing of colour-related data of document data streams and for the output of the document data on the output medium.

16. The method according to claim 15, wherein the output medium is a recording medium and recording medium data regarding its colour, brightness, weight and/or surface property are provided in the colour management resource.

17. The method according to one of the preceding claims, wherein data that are related to colour management resources are provided as job companion data in a file that is in particular separate from the rest of the document data stream.

18. The method according to claim 17, wherein the job companion data, their file and/or additional job companion data are structured according to the specification of the Job Definition Format.

19. A computer program product, that produces a method workflow according to one of the preceding claims upon being loaded and executed on a computer.

20. A computer to generate and/or process a document data stream comprising means to implement a method according to one of the claims 1 to 18.

21. A device, comprising a controller for processing a document data stream that was generated according to one of the claims 1 to 18, wherein the controller uses the data relating to an indexed colour management resource to form control signals that are suitable to control an output unit.

22. The device according to claim 21, wherein the output unit is a printing device, and the control signals or data derived from them are used to select print colorants contained in the printing device in at least one printing unit.

23. The device according to claim 22, wherein the printing unit comprises an electrographic developer station and the print colorant consists of toner.

## Revendications

1. Procédé de production et/ou de traitement d'un flux de données d'un document, qui contient des données qui sont liées aux ressources de gestion des encres et avec lesquelles la gestion des données relatives aux couleurs du flux de données d'un document peut être commandée, dans lequel procédé est associée au flux de données d'un document une ressource de gestion des encres indexée, par laquelle des données liées aux couleurs du flux de données d'un document peuvent être associées à plusieurs palettes de couleurs prédéfinies, dans lequel, à l'intérieur d'une palette de couleurs, une valeur index est associée à plusieurs couleurs, dans lequel, dans la ressource de gestion des encres, sont stockées respectivement des valeurs, qui se rapportent aux couleurs indexées et qui sont associées à des parts correspondantes des nuances de couleur pour la reproduction de la couleur respectivement indexée, dans lequel les palettes de couleurs sont comparées au-delà du système, entre un système qui génère les données d'un document, et un système d'édition qui édite les données d'un document, et dans lequel le flux de données d'un document est structuré selon la spécification AFP, MO:DCA et/ou IPDS.

2. Procédé selon la revendication 1, dans lequel la ressource de gestion des encres indexée contient une information codée, qui est associée au nombre de palettes de couleurs du processus disponibles dans la ressource de gestion des encres indexée.

3. Procédé selon l'une quelconque des revendications précédentes, dans lequel la ressource de gestion des encres indexée contient, par palette de couleurs du processus, une information codée qui indique quelles nuances de couleurs, disponibles dans un système d'édition et/ou définies dans un système de couleurs, tel que RVB, JMCN, sont nécessaires pour la reproduction des couleurs de la palette respective des couleurs du processus.

4. Procédé selon la revendication 3, dans lequel l'information codée est associée à un nom en clair d'une nuance de couleur et/ou à un numéro d'une nuance de couleur dans un système de définition de couleur prédéfini, tel que Pantone^{®} ou RAL^{®}.

5. Procédé selon l'une quelconque des revendications précédentes, dans lequel la ressource de gestion des encres indexée et/ou les données du flux de données d'un document qui lui sont associées contiennent, par palette de couleurs du processus, une information codée sur les couleurs disponibles dans le processus de production des données d'un document et/ou dans le processus de traitement des données d'un document et/ou dans le dispositif d'édition.

6. Procédé selon l'une quelconque des revendications précédentes, dans lequel la ressource de gestion des encres indexée contient une information codée, qui indique à quelle deuxième palette de couleurs sont nouvellement associées les données du flux de données d'un document, lorsqu'elles ne sont pas reproductibles sur un dispositif d'édition avec l'association initiale à une première palette de couleurs.

7. Procédé selon l'une quelconque des revendications précédentes, dans lequel le flux de données d'un document est édité par un serveur d'impression sur un appareil d'impression.

8. Procédé selon la revendication 7, dans lequel les étapes de traitement de l'association des couleurs sont effectuées au moins partiellement dans le serveur d'impression et/ou dans l'appareil d'impression.

9. Procédé selon l'une quelconque des revendications précédentes, dans lequel, lors du traitement du flux de données d'un document, il est vérifié si une couleur et/ou une palette de couleurs, définie dans la ressource de gestion des encres et référencée dans le flux de données au moyen d'un code d'index, est disponible dans le dispositif d'édition avant que se produise l'édition.

10. Procédé selon l'une quelconque des revendications précédentes, dans lequel la ressource de gestion des encres contient une identification qui est associée à une palette de couleurs, ladite palette de couleurs étant associée à un espace de couleur.

11. Procédé selon la revendication 10, dans lequel l'identification est associée à l'un des espaces de couleur « nuances individuelles », CMJN, CIELAB, RVB ou nuances de gris.

12. Procédé selon la revendication 11, dans lequel des informations codées par rapport à l'espace de couleur « nuances individuelles », lesquelles représentent des nuances de couleurs définies dans cet espace de couleur, sont contenues dans la ressource de gestion des encres.

13. Procédé selon la revendication 11 ou 12, dans lequel, pour créer les données liées à l'espace des nuances de couleur individuelles dans la ressource de gestion des encres, les nuances de couleur de base, disponibles dans un dispositif d'édition, sont transmises par le dispositif d'édition vers un système prévu pour la création de la ressource de gestion des encres.

14. Procédé selon l'une quelconque des revendications précédentes, destiné à la production et/ou au traitement d'un flux de données d'un document basé sur des ressources, par lequel peut être commandée l'édition d'au moins un document sur un support d'édition, le flux de données d'un document contenant des données de référence aux ressources, relatives à au moins une ressource de gestion des encres, et des données de référence au support, relatives au support d'édition, et les données de référence aux ressources et les données de référence au support sont liées logiquement entre elles de telle sorte que, en cas de changement d'un nom de référence relatif à un support d'édition à l'intérieur du flux de données d'un document, il se produit automatiquement un changement de nom de référence relatif à une ressource de gestion des encres.

15. Procédé selon la revendication 14, dans lequel la ressource de gestion des encres pour le traitement des donnés liées aux couleurs dans les flux de données d'un document et pour l'édition des données du document sur le support d'édition contient des données adaptées aux propriétés du support d'édition.

16. Procédé selon la revendication 15, dans lequel le support d'édition est un support d'impression et, dans la ressource de gestion des encres, sont prévues des données du support d'impression relatives à la couleur, à la luminosité, au poids et/ou à la propriété de la surface de celui-ci.

17. Procédé selon l'une quelconque des revendications précédentes, dans lequel des données, qui se rapportent aux ressources de gestion des encres, sont prévues sous forme de données d'accompagnement d'instruction dans un fichier, séparé en particulier du reste du flux de données d'un document.

18. Procédé selon la revendication 17, dans lequel les données d'accompagnement d'instruction, le fichier de celles-ci et/ou d'autres données d'accompagnement d'instruction sont structurés selon la spécification du format de définition de la tâche.

19. Produit d'un programme informatique, qui, lors de son chargement et de son exécution sur un ordinateur, génère un déroulement du procédé selon l'une quelconque des revendications précédentes.

20. Ordinateur pour la production et/ou le traitement d'un flux de données d'un document, comportant des moyens pour la mise en oeuvre d'un procédé selon l'une quelconque des revendications 1 à 18.

21. Dispositif comportant un contrôleur pour le traitement d'un flux de données d'un document, qui a été créé selon l'une quelconque des revendications 1 à 18, ledit contrôleur utilisant les données relatives à une ressource de gestion des encres indexée, en vue de la formation de signaux de commande, qui sont aptes à commander une unité d'édition.

22. Dispositif selon la revendication 21, dans lequel l'unité d'édition est un appareil d'impression et les signaux de commande ou les données dérivées de ceux-ci sont utilisés dans au moins un groupe d'impression pour sélectionner les encres d'impression teintées contenues dans l'appareil d'impression.

23. Dispositif selon la revendication 22, dans lequel le groupe d'impression comporte un poste de développement électrographique et l'encre d'impression teintée est formée par un toner.
